# EUROPEAN PATENT APPLICATION

(11) **EP 4 576 630 A1**
(43) Date of publication of application: **25.06.2025**
(21) Application number: 23842144.0
(22) Date of filing: 10.07.2023
(51) Int. Cl.: H04L 5/00

(54) **METHOD AND DEVICE USED IN WIRELESS COMMUNICATION NODE**

(30) Priority: 20.07.2022 CN 202210857518
(71) Applicant: SHANGHAI LANGBO COMMUNICATION TECHNOLOGY COMPANY LIMITED, Shanghai 200240 (CN)
(72) Inventor: WU, Keying, Shanghai 201206 (CN); ZHANG, Xiaobo, Shanghai 201206 (CN)
(74) Representative: Gunzelmann, Rainer
(86) International application number: PCT/CN2023/106501
(87) International publication number: WO 2024/017079

(57) **Abstract**

The present application discloses a method and device used in a wireless communication node. The method comprises: a first node receives a first message set and first DCI; executes measurement on a first RS resource group; and sends first CSI on a PUSCH of a first cell. The first message set comprises a first message. The first DCI comprises a first field and a second field. The first DCI is used for scheduling PUSCHs on at least K cells, and K is a positive integer greater than 1. The first cell is one of the K cells. The first field of the first DCI is used for triggering the first CSI. The second field of the first DCI is used for determining the first cell. The measurement executed on the first RS resource group is used for calculating the first CSI. The first message is used to indicate the first RS resource group. According to the method, flexibility is increased, signaling overhead is reduced, and the reliability of CSI transmission is optimized.

## Description

### Technical Field

The present application relates to a transmission method and device in a wireless communication system, and in particular, to a scheme and device related to CSI (Channel Status Information) in a wireless communication system.

### Related Art

In traditional wireless communication, UE (User Equipment) reporting may include at least one of various auxiliary information, such as CSI, beam management related auxiliary information, and positioning related auxiliary information. CSI includes at least one of CRI (CSI-RS Resource Indicator), RI (Rank Indicator), PMI (Precoding Matrix Indicator), or CQI (Channel Quality Indicator).

A network apparatus selects appropriate transmission parameters for the UE based on the UE reporting, such as residing cell, MCS (Modulation and Coding Scheme), TPMI (Transmitted Precoding Matrix Indicator), and TCI (Transmission Configuration Indicator). In addition, the UE reporting may be used for optimizing network parameters, such as better cell coverage and base station switching based on a UE location.

In an NR (New Radio) system, CSI reporting may be periodic, semi-persistent, or aperiodic. Semi-persistent CSI reporting needs to be activated through DCI (Downlink Control Information) or MAC CE (Medium Access Control layer Control Element), while aperiodic CSI reporting needs to be triggered through DCI.

### SUMMARY

In an NR (New Radio) system, one DCI scheduling PUSCHs (Physical Uplink Shared Channels)/PDSCHs (Physical Downlink Shared Channels) of multiple cells is proposed. As found by the inventor through research, the existing CSI reporting triggering scheme may no longer be applicable in this application scenario.

Aiming at solving the above problem, the present application discloses a solution. It needs to be noted that although the original intention of the present application is to describe a transmission scenario that one DCI schedules PUSCHs/PDSCHs of multiple cells, the present application may also be applied to a transmission scenario that one DCI schedules PUSCHs/PDSCHs of a single cell. Further, adopting a unified design scheme for different scenarios (including but not limited to scenarios that one DCI schedules PUSCHs/PDSCHs of multiple cells and one DCI schedules PUSCHs/PDSCHs of a single cell) can also help to reduce the hardware complexity and cost. In the case of no conflict, embodiments of any node in the present application and features in the embodiments may be applied to any other node. In the case of no conflict, embodiments of the present application and features in the embodiments may be freely combined.

As an embodiment, the terminology in the present application is explained based on the definition in TS36 series of 3GPP specification protocols.

As an embodiment, the terminology in the present application is explained based on the definition in TS38 series of 3GPP specification protocols.

As an embodiment, the terminology in the present application is explained based on the definition in TS37 series of 3GPP specification protocols.

As an embodiment, the terminology in the present application is explained based on the definition in IEEE (Institute of Electrical and Electronics Engineers) specification protocols.

The present application discloses a method used in a first node for wireless communication, including:
receiving a first message set and first DCI, where the first message set includes a first message, and the first DCI includes a first field and a second field;
executing measurement on a first RS resource group; and
transmitting a first CSI set on a PUSCH of a first cell, where the first CSI set includes a first CSI;
where the first DCI is used for scheduling PUSCHs on at least K cells, and K is a positive integer greater than 1; the first cell is one of the K cells; the first field in the first DCI is used for triggering the first CSI; the second field in the first DCI is used for determining the first cell; and the measurement executed on the first RS resource group is used for calculating the first CSI, and the first message is used to indicate the first RS resource group.

As an embodiment, the method determines the first cell where the PUSCH carrying the first CSI set is located through the second field in the first DCI, thus improving the flexibility, reducing the signaling overhead, and optimizing the transmission reliability of the first CSI set.

According to one aspect of the present application, the first DCI includes K sub-fields, and the K sub-fields are respectively used for scheduling the K cells; and the second field in the first DCI includes at least one of the K sub-fields.

According to one aspect of the present application, the K sub-fields respectively indicate K MCSs, the K MCSs are respectively used for K PUSCHs, and the K PUSCHs are respectively located on the K cells.

As an embodiment, the method has the following advantage: by using the MCS to implicitly determine the first cell where the PUSCH carrying the first CSI set is located, the signaling overhead is reduced.

As an embodiment, the method has the following advantage: the transmission reliability of the first CSI set is optimized.

According to one aspect of the present application, the K sub-fields are respectively used for determining K cell indexes, and the K cell indexes are respectively assigned to the K cells.

As an embodiment, the method has the following advantage: by using the K cell indexes to implicitly determine the first cell where the PUSCH carrying the first CSI set is located, the signaling overhead is reduced.

As an embodiment, the method has the following advantage: the transmission reliability of the first CSI set is optimized.

According to one aspect of the present application, the first cell is a cell indicated by a sub-field of the K sub-fields located at a target position; and the target position is default.

According to one aspect of the present application, the K sub-fields are respectively used for determining priorities of K PUSCHs, and the K PUSCHs are respectively located on the K cells.

As an embodiment, the method has the following advantage: by using the priorities of the K PUSCHs to implicitly determine the first cell where the PUSCH carrying the first CSI set is located, the signaling overhead is reduced.

As an embodiment, the method has the following advantage: the transmission reliability of the first CSI set is optimized.

According to one aspect of the present application, the second field in the first DCI indicates a first index set, the first index set includes K cell indexes, and the K cell indexes are respectively assigned to the K cells.

As an embodiment, the method has the following advantage: by using the K cell indexes to implicitly determine the first cell where the PUSCH carrying the first CSI set is located, the signaling overhead is reduced.

As an embodiment, the method has the following advantage: the transmission reliability of the first CSI set is optimized.

According to one aspect of the present application, the first node is user equipment.

According to one aspect of the present application, the first node is a relay node.

The present application discloses a method used in a second node for wireless communication, including:
transmitting a first message set and first DCI, where the first message set includes a first message, and the first DCI includes a first field and a second field; and
receiving a first CSI set on a PUSCH of a first cell, where the first CSI set includes a first CSI;
where the first DCI is used for scheduling PUSCHs on at least K cells, and K is a positive integer greater than 1; the first cell is one of the K cells; the first field in the first DCI is used for triggering the first CSI; the second field in the first DCI is used for determining the first cell; and measurement executed on a first RS resource group is used for calculating the first CSI, and the first message is used to indicate the first RS resource group.

According to one aspect of the present application, the first DCI includes K sub-fields, and the K sub-fields are respectively used for scheduling the K cells; and the second field in the first DCI includes at least one of the K sub-fields.

According to one aspect of the present application, the K sub-fields respectively indicate K MCSs, the K MCSs are respectively used for K PUSCHs, and the K PUSCHs are respectively located on the K cells.

According to one aspect of the present application, the K sub-fields are respectively used for determining K cell indexes, and the K cell indexes are respectively assigned to the K cells.

According to one aspect of the present application, the first cell is a cell indicated by a sub-field of the K sub-fields located at a target position; and the target position is default.

According to one aspect of the present application, the K sub-fields are respectively used for determining priorities of K PUSCHs, and the K PUSCHs are respectively located on the K cells.

According to one aspect of the present application, the second field in the first DCI indicates a first index set, the first index set includes K cell indexes, and the K cell indexes are respectively assigned to the K cells.

According to one aspect of the present application, the second node is a base station.

According to one aspect of the present application, the second node is user equipment.

According to one aspect of the present application, the second node is a relay node.

The present application discloses a first node for wireless communication, including:
a first receiver configured to receive a first message set and first DCI, where the first message set includes a first message, and the first DCI includes a first field and a second field; and execute measurement on a first RS resource group; and
a first transmitter configured to transmit a first CSI set on a PUSCH of a first cell, where the first CSI set includes a first CSI;
where the first DCI is used for scheduling PUSCHs on at least K cells, and K is a positive integer greater than 1; the first cell is one of the K cells; the first field in the first DCI is used for triggering the first CSI; the second field in the first DCI is used for determining the first cell; and the measurement executed on the first RS resource group is used for calculating the first CSI, and the first message is used to indicate the first RS resource group.

The present application discloses a second node for wireless communication, including:
a second transmitter configured to transmit a first message set and first DCI, where the first message set includes a first message, and the first DCI includes a first field and a second field; and
a second receiver configured to receive a first CSI set on a PUSCH of a first cell, where the first CSI set includes a first CSI;
where the first DCI is used for scheduling PUSCHs on at least K cells, and K is a positive integer greater than 1; the first cell is one of the K cells; the first field in the first DCI is used for triggering the first CSI; the second field in the first DCI is used for determining the first cell; and measurement executed on a first RS resource group is used for calculating the first CSI, and the first message is used to indicate the first RS resource group.

As an embodiment, compared with the traditional scheme, the present application has the following advantages:
the flexibility is improved
the signaling overhead is reduced
the transmission reliability of CSI is optimized

### BRIEF DESCRIPTION OF THE DRAWINGS

Other features, purposes, and advantages of the present application will become more apparent by reading the detailed description of non-limiting embodiments in the following figures:
FIG. 1 shows a flowchart of a first message set, a first DCI, a first RS resource group, and a first CSI set according to an embodiment of the present application;
FIG. 2 shows a schematic diagram of a network architecture according to an embodiment of the present application;
FIG. 3 shows a schematic diagram of an embodiment of a radio protocol architecture for a user plane and a control plane according to an embodiment of the present application;
FIG. 4 shows a schematic diagram of a first communication apparatus and a second communication apparatus according to an embodiment of the present application;
FIG. 5 shows a flowchart of transmission according to an embodiment of the present application;
FIG. 6 shows a schematic diagram of K sub-fields according to an embodiment of the present application;
FIG. 7 shows a schematic diagram of K sub-fields respectively used to indicate K MCSs according to an embodiment of the present application;
FIG. 8 shows a schematic diagram of K sub-fields respectively used for determining K cell indexes according to an embodiment of the present application;
FIG. 9 shows a schematic diagram of K cell indexes used for determining a first cell according to an embodiment of the present application;
FIG. 10 shows a schematic diagram of a cell of K cells that is configured with PUCCHs used for determining a first cell according to an embodiment of the present application;
FIG. 11 shows a schematic diagram of a first cell that is a cell indicated by a sub-field of K sub-fields located at a target position according to an embodiment of the present application;
FIG. 12 shows a schematic diagram of K sub-fields respectively used for determining priorities of K PUSCHs according to an embodiment of the present application;
FIG. 13 shows a schematic diagram of a second field in a first DCI used to indicate a first index set according to an embodiment of the present application;
FIG. 14 shows a structural block diagram of a processing device used in a first node according to an embodiment of the present application; and
FIG. 15 shows a structural block diagram of a processing device used in a second node according to an embodiment of the present application.

### DETAILED DESCRIPTION

The technical solutions of the present application will be further described below with reference to the drawings. It needs to be noted that in the case of no conflict, embodiments of the present application and features in the embodiments may be freely combined.

### Embodiment 1

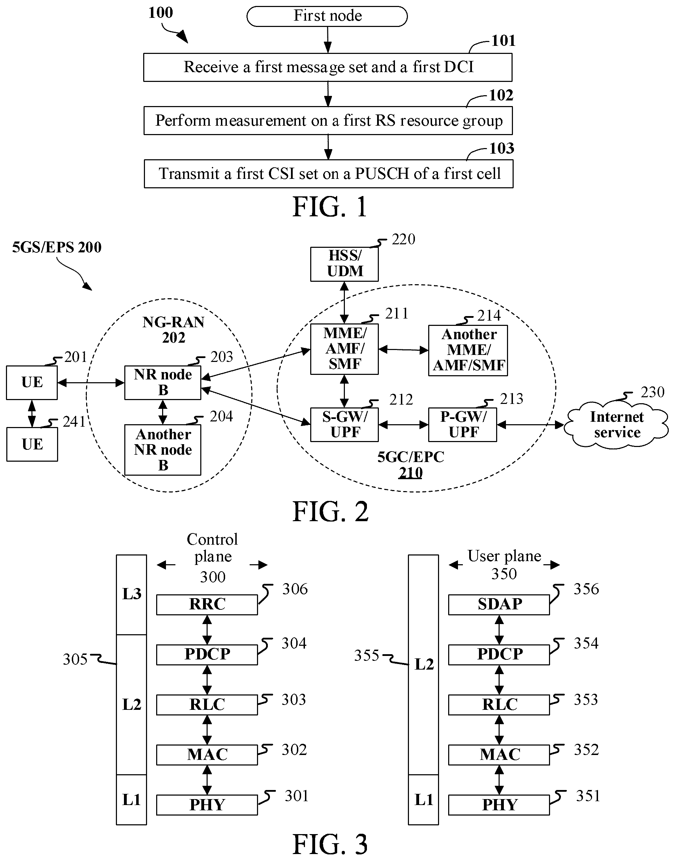

Embodiment 1 exemplifies a flowchart of a first message set, a first DCI, a first RS resource group, and a first CSI set according to an embodiment of the present application, as shown in FIG. 1. In 100 shown in FIG. 1, each block represents a step. Specifically, the order of steps in blocks does not represent a specific chronological relationship between the steps.

In embodiment 1, the first node in the present application, in step 101, receives a first message set and first DCI, where the first message set includes a first message, and the first DCI includes a first field and a second field; in step 102, executes measurement on a first RS resource group; and in step 103, transmits a first CSI set on a PUSCH of a first cell, where the first CSI set includes first CSI, where the first DCI is used for scheduling PUSCHs on at least K cells, and K is a positive integer greater than 1; the first cell is one of the K cells; the first field in the first DCI is used for triggering the first CSI; the second field in the first DCI is used for determining the first cell; and the measurement executed on the first RS resource group is used for calculating the first CSI, and the first message is used to indicate the first RS resource group.

As an embodiment, the DCI refers to Downlink Control Information.

As an embodiment, the CSI refers to Channel State Information.

As an embodiment, the PUSCH refers to Physical Uplink Shared Channel.

As an embodiment, the RS refers to Reference Signal.

As an embodiment, the first message set is carried by higher layer signaling.

As an embodiment, the first message set is carried by RRC (Radio Resource Control) signaling.

As an embodiment, the first message set is carried by an RRC IE (Information Element).

As an embodiment, the first message set includes an RRC IE.

As an embodiment, the first message set includes an RRC IE, and the name of the RRC IE included in the first message set includes "CSI MeasConfig".

As an embodiment, the first message set includes a CSI-MeasConfig IE.

As an embodiment, the first message set includes information in all or partial fields in a CSI-MeasConfig IE.

As an embodiment, the first message set is composed of the first message.

As an embodiment, the first message set at least includes another message in addition to the first message.

As a sub-embodiment of the above embodiment, the other message and the first message are respectively carried by different RRC IEs.

As a sub-embodiment of the above embodiment, the other message and the first message are respectively carried by different fields of the same RRC IE.

As an embodiment, the first message is carried by higher layer signaling.

As an embodiment, the first message is carried by RRC signaling.

As an embodiment, the first message is carried by an RRC IE.

As an embodiment, the first message includes an RRC IE.

As an embodiment, the first message includes a CSI-MeasConfig IE.

As an embodiment, the first message includes information in all or partial fields in a CSI-MeasConfig IE.

As an embodiment, the first message is an RRC IE, and the name of the first message includes "CSI-MeasConfig".

As an embodiment, the first message is a CSI-MeasConfig IE.

As an embodiment, the first message is an RRC IE, and the name of the first message includes "CSI-ReportConfig".

As an embodiment, the first message includes information in all or partial fields in a CSI-ReportConfig IE.

As an embodiment, the first message is a CSI-ReportConfig IE.

As an embodiment, the first message includes information in all or partial fields in a CSI-AperiodicTriggerStateList IE.

As an embodiment, the first message includes information in all or partial fields in a CSI-ResourceConfig IE.

As an embodiment, the first field and the second field respectively include at least one bit.

As an embodiment, the first field includes at least one DCI field.

As an embodiment, the first field is a DCI field.

As an embodiment, the first field includes multiple DCI fields.

As an embodiment, the first field includes a DCI field CSI request.

As an embodiment, the first field includes all or partial information in a DCI field CSI request.

As an embodiment, the first field is a DCI field CSI request.

As an embodiment, the second field includes at least one DCI field.

As an embodiment, the second field includes multiple DCI fields.

As an embodiment, the second field is a DCI field.

As an embodiment, the second field includes partial bits of at least one DCI field.

As an embodiment, the second field includes partial bits of a DCI field.

As an embodiment, the second field includes partial bits of each DCI field in multiple DCI fields.

As an embodiment, the first cell is a serving cell of the first node.

As an embodiment, the first node executes auxiliary serving cell addition for the first cell.

As an embodiment, sCellToAddModList or sCellToAddModListSCG latest received by the first node includes the first cell.

As an embodiment, the first node is assigned an SCellIndex or a ServCellIndex for the first cell.

As an embodiment, an RRC connection has been established between the first node and the first cell.

As an embodiment, a C (Cell)-RNTI (Radio Network Temporary Identifier) of the first node is assigned by the first cell.

As an embodiment, the C-RNTI of the first node is assigned by a cell different from the first cell.

As an embodiment, the first cell is a SpCell (Special Cell) or an SCell (Secondary Cell) of the first node.

As an embodiment, K is not greater than 8.

As an embodiment, K is not greater than 32.

As an embodiment, each cell of the K cells is a serving cell of the first node.

As an embodiment, the first node executes auxiliary serving cell addition for each cell of the K cells.

As an embodiment, sCellToAddModList or sCellToAddModListSCG latest received by the first node includes each cell of the K cells.

As an embodiment, for each cell of the K cells, the first node is assigned an SCellIndex or a ServCellIndex specific to that cell.

As an embodiment, an RRC connection has been established between the first node and each cell of the K cells.

As an embodiment, the C-RNTI of the first node is assigned by a cell of the K cells.

As an embodiment, the C-RNTI of the first node is assigned by a cell that does not belong to the K cells.

As an embodiment, the K cells include a SpCell (Special Cell) of the first node.

As an embodiment, the K cells include an SCell (Secondary Cell) of the first node.

As an embodiment, any cell of the K cells is the SpCell or SCell of the first node.

As an embodiment, the serving cell is as defined in 3GPP TS 38.331.

As an embodiment, the K cells belong to the same cell group.

As an embodiment, the K cells all belong to an MCG (Master Cell Group) or an SCG (Secondary Cell Group).

As an embodiment, the K cells belong to the same PUCCH (Physical Uplink Control Channel) group.

As an embodiment, a PUCCH group includes a group of cells, PUCCH signaling of the group of cells is associated with PUCCHs of a SpCell (Special Cell) or with PUCCHs of a PUCCH SCell (Secondary Cell); and a PUCCH SCell is an SCell configured with PUCCHs.

As an embodiment, a PUCCH group includes a group of cells, and PUCCH signaling of the group of cells is associated with PUCCHs of the same cell.

As a sub-embodiment of the above embodiment, the PUCCHs carrying the PUCCH signaling of the group of cells are transmitted in the same cell.

As a sub-embodiment of the above embodiment, the PUCCHs carrying the PUCCH signaling of the group of cells are configured for the PUCCHs of the same cell.

As a sub-embodiment of the above embodiment, the same cell is a PUCCH cell of the group of cells.

As a sub-embodiment of the above embodiment, the same cell is an SpCell or a PUCCH SCell of the group of cells.

As a sub-embodiment of the above embodiment, the same cell is a cell configured with PUCCHs of the group of cells.

As a sub-embodiment of the above embodiment, the same cell is the only cell configured with PUCCHs of the group of cells.

As an embodiment, the PUCCH group is as defined in 3GPP TS38.300 and 3GPP TS38.331.

As an embodiment, the PUCCH SCell is as defined in 3GPP TS38.300 and 3GPP TS38.331.

As an embodiment, the K cells have the same numerology.

As an embodiment, the K cells have the same subcarrier spacing configuration.

As an embodiment, K BWPs (Bandwidth Parts) are respectively BWPs scheduled by the first DCI of the K cells, and the K BWPs have the same numerology.

As an embodiment, K BWPs are respectively BWPs scheduled by the first DCI of the K cells, and the K BWPs have the same subcarrier spacing configuration.

As an embodiment, the first DCI is transmitted on the first cell.

As an embodiment, the first DCI is transmitted on another cell different from the first cell.

As a sub-embodiment of the above embodiment, the other cell is a serving cell of the first node.

As an embodiment, the first DCI is transmitted on a second cell.

As an embodiment, a frequency-domain resource occupied by the first DCI belongs to the second cell.

As an embodiment, CRC (Cyclic Redundancy Check) of the first DCI is scrambled by a first RNTI, and the first RNTI is assigned by the second cell.

As an embodiment, a cell identity of the second cell or a higher layer parameter "pdcch-DMRS-ScramblingID" configured for the second cell is used for determining a DMRS sequence of a PDCCH (Physical Downlink Control Channel) carrying the first DCI.

As an embodiment, a cell configured by a ServingCellConfig IE to which a ControlResourceSet belongs for configuring a CORESET (Control Resource Set) to which the first DCI belongs is the second cell.

As an embodiment, a cell index indicated by SpCellConfig or SCellConfig to which the ControlResourceSet IE belongs for configuring the CORESET to which the first DCI belongs is equal to a cell index of the second cell.

As an embodiment, the CORESET to which the first DCI belongs is configured on the second cell.

As an embodiment, the second cell is a serving cell of the first node.

As an embodiment, the second cell and the first cell are the same cell.

As an embodiment, the second cell and the first cell have the same PCI (Physical Cell Identity).

As an embodiment, the second cell is a cell different from the first cell.

As an embodiment, the second cell and the first cell have different PCIs.

As an embodiment, the second cell and the K cells belong to the same cell group.

As an embodiment, the second cell and the K cells both belong to an MCG or an SCG.

As an embodiment, the second cell and the K cells belong to different cell groups.

As an embodiment, the second cell and the K cells belong to the same PUCCH group.

As an embodiment, the second cell and the K cells belong to different PUCCH groups.

As an embodiment, the second cell is one of the K cells.

As an embodiment, the second cell does not belong to the K cells.

As an embodiment, the first node executes auxiliary serving cell addition for the second cell.

As an embodiment, sCellToAddModList or sCellToAddModListSCG latest received by the first node includes the second cell.

As an embodiment, the first node is assigned an SCellIndex or a ServCellIndex for the second cell.

As an embodiment, an RRC connection has been established between the first node and the second cell.

As an embodiment, the C-RNTI of the first node is assigned by the second cell.

As an embodiment, the C-RNTI of the first node is assigned by a cell different from the second cell.

As an embodiment, the second cell is a SpCell (Special Cell) or an SCell (Secondary Cell) of the first node.

As an embodiment, the first DCI is transmitted in a first BWP of the second cell, and the first BWP and the K BWPs have the same subcarrier spacing configuration.

As an embodiment, the first DCI is transmitted in a first BWP of the second cell, and the first BWP and the K BWPs have different subcarrier spacing configurations.

As an embodiment, the measurement executed on the first RS resource group includes measurement executed on each RS resource in the first RS resource group.

As an embodiment, the measurement executed on the first RS resource group includes measurement executed on at least one RS resource in the first RS resource group.

As an embodiment, the measurement executed on the first RS resource group includes measurement executed on RS signals transmitted in each RS resource in the first RS resource group.

As an embodiment, the measurement executed on the first RS resource group includes measurement executed RS signals transmitted in at least one RS resource in the first RS resource group.

As an embodiment, the measurement executed on the first RS resource group includes channel measurement.

As an embodiment, the measurement executed on the first RS resource group is channel measurement.

As an embodiment, the measurement executed on the first RS resource group includes interference measurement.

As an embodiment, the first node obtains channel measurement for calculating the first CSI based on the measurement executed on the first RS resource group.

As an embodiment, the first node obtains interference measurement for calculating the first CSI based on the measurement executed on the first RS resource group.

As an embodiment, the first RS resource group includes at least one RS resource.

As an embodiment, the first RS resource group includes only one RS resource.

As an embodiment, the first RS resource group includes multiple RS resources.

As an embodiment, the first RS resource group includes at least one CSI-RS (Channel State Information-Reference Signal) resource set.

As an embodiment, the first RS resource group includes is a CSI-RS resource set.

As an embodiment, the first RS resource group is identified by an NZP-CSI-RS-ResourceSetId.

As an embodiment, the first RS resource group is identified by a CSI-SSB-ResourceSetId.

As an embodiment, the first RS resource group includes at least one CSI-IM (Channel State Information-Interference Measurement) resource set.

As an embodiment, the first RS resource group includes is a CSI-IM resource set.

As an embodiment, the first RS resource group includes at least one CSI-RS resource set and at least one CSI-IM resource set.

As an embodiment, there is one RS resource in the first RS resource group that is a CSI-RS resource.

As an embodiment, there is one RS resource in the first RS resource group that is an SS (Synchronization Signal)/PBCH (Physical Broadcast Channel) Block resource.

As an embodiment, there is one RS resource in the first RS resource group that is a CSI-IM resource.

As an embodiment, any RS resource in the first RS resource group is a CSI-RS resource, an SS/PBCH Block resource, or a CSI-IM resource.

As an embodiment, any RS resource in the first RS resource group is a CSI-RS resource or an SS/PBCH Block resource.

As an embodiment, any RS resource in the first RS resource group is a downlink RS resource.

As an embodiment, any RS resource in the first RS resource group includes at least one RS port.

As an embodiment, the RS port includes a CSI-RS port.

As an embodiment, the RS port includes an antenna port.

As an embodiment, a CSI-RS resource set is identified by an NZP-CSI-RS-ResourceSetId.

As an embodiment, a CSI-RS resource set is configured by an NZP-CSI-RS-ResourceSet IE.

As an embodiment, a CSI-RS resource set includes at least one CSI-RS resource.

As an embodiment, a CSI-RS resource is identified by an NZP-CSI-RS-ResourceId.

As an embodiment, a CSI-RS resource is configured by an NZP-CSI-RS-Resource IE.

As an embodiment, a CSI-IM resource set is identified by a CSI-IM-ResourceSetId.

As an embodiment, a CSI-IM resource set is configured by a CSI-IM-ResourceSet IE.

As an embodiment, a CSI-IM resource set includes at least one CSI-IM resource.

As an embodiment, a CSI-IM resource is identified by a CSI-IM-ResourceId.

As an embodiment, a CSI-IM resource is configured by a CSI-IM-Resource IE.

As an embodiment, an SS/PBCH Block resource is identified by an SSB-Index.

As an embodiment, the first message is used for configuring a CSI-ReportConfig corresponding to the first CSI.

As an embodiment, the first message includes a CSI-ReportConfig IE corresponding to the first CSI.

As an embodiment, the first message is used to indicate that RS resources for channel measurement of the CSI-ReportConfig corresponding to the first CSI include the first RS resource group.

As an embodiment, the first message includes a CSI-ResourceConfig IE for configuring the first RS resource group.

As an embodiment, the first message includes a CSI-MeasConfig IE to which the CSI-ReportConfig corresponding to the first CSI belongs.

As an embodiment, the first RS resource group is located on the first cell.

As an embodiment, the second field in the first DCI is used for determining a cell where the first RS resource group is located.

As an embodiment, the first RS resource group is located on another cell different from the first cell.

As an embodiment, the first DCI is transmitted on a second cell, and the first RS resource group is located on the second cell.

As an embodiment, the first RS resource group is located on a target cell, and the CSI-ReportConfig corresponding to the first CSI is used for determining the target cell.

As an embodiment, the first RS resource group is located on the target cell; in a case that the CSI-ReportConfig corresponding to the first CSI includes a "carrier" field, the target cell is a cell indicated by the "carrier" field; and in a case that the CSI-ReportConfig corresponding to the first CSI does not include a "carrier" field, the target cell is a given cell, and the CSI-ReportConfig corresponding to the first CSI is located on the given cell.

As an embodiment, the meaning of an RS resource group being located on a cell includes that the RS resource group is configured for the cell.

As an embodiment, the meaning of an RS resource group being located on a cell includes that the RS resource group is configured on the cell.

As an embodiment, the meaning of an RS resource group being located on a cell includes that a frequency-domain resource occupied by the RS resource group belongs to the cell.

As an embodiment, the meaning of an RS resource group being located on a cell includes that a transmitted RS of the RS resource group is transmitted in the cell.

As an embodiment, the meaning of an RS resource group being located on a cell includes that a cell configured by an ServingCellConfig IE to which an IE for configuring the RS resource group belongs is the cell.

As an embodiment, the meaning of an RS resource group being located on a cell includes that a cell index indicated by an SpCellConfig or SCellConfig to which the IE for configuring the RS resource group belongs is equal to a cell index of the cell.

As an embodiment, the IE for configuring the first RS resource group includes at least one IE.

As an embodiment, the IE for configuring the RS resource group includes at least one of CSI-ResourceConfig IE, NZP-CSI-RS-ResourceSet IE, CSI-SSB-ResourceSet IE, CSI-IM-ResourceSet IE, and CSI-AperiodicTriggerStateList IE.

As an embodiment, the cell index includes at least one of a ServCellIndex and an SCellIndex; the cell index indicated by an SpCellConfig is an ServCellIndex; and the cell index indicated by an SCellConfig is an SCellIndex.

As an embodiment, all RS resources in the first RS resource group are located on the same cell.

As an embodiment, all RS resources in the first RS resource group are located on the first cell.

As an embodiment, the first DCI is transmitted on a second cell, and all RS resources in the first RS resource group are located on the second cell.

As an embodiment, there are two RS resources in the first RS resource group that are respectively located on different cells.

As an embodiment, there are two RS resources in the first RS resource group that are configured in different cells.

As an embodiment, there are two RS resources in the first RS resource group that occupy frequency-domain resources respectively belonging to different cells.

As an embodiment, there are two RS resources in the first RS resource group, and IEs for configuring the two RS resources belong to two different ServingCellConfig IEs.

As a sub-embodiment of the above embodiment, the two different ServingCellConfig IEs are respectively used for configuring two different cells.

As an embodiment, there are two RS resources in the first RS resource group, and cell indexes indicated by SpCellConfig or SCellConfig to which the IEs for configuring the two RS resources belong are not equal.

As an embodiment, there is one RS resource in the first RS resource group that is located on the first cell, and there is another RS resource in the first RS resource group that is located on another cell different from the first cell.

As an embodiment, the first DCI is transmitted on a second cell; and there is one RS resource in the first RS resource group that is located on the second cell, and there is another RS resource in the first RS resource group that is located on another cell different from the second cell.

As an embodiment, any resource group in the first RS resource group is located on a cell of the K cells.

As an embodiment, there is one resource group in the first RS resource group that is located on a cell not belonging to the K cells.

As an embodiment, the meaning of an RS resource being located on a cell includes that the RS resource is configured in the cell.

As an embodiment, the meaning of an RS resource being located on a cell includes that a frequency-domain resource occupied by the RS resource belongs to the cell.

As an embodiment, the meaning of an RS resource being located on a cell includes that a cell configured by an ServingCellConfig IE to which an IE for configuring the RS resource belongs is the cell.

As an embodiment, the meaning of an RS resource being located on a cell includes that a cell index indicated by an SpCellConfig or SCellConfig to which the IE for configuring the RS resource belongs is equal to a cell index of the cell.

As an embodiment, the IE for configuring the first RS resource includes at least one IE.

As an embodiment, the IE for configuring the first RS resource includes at least one of NZP-CSI-RS-Resource IE and CSI-IM-Resource IE.

As an embodiment, at least one RS resource in the first RS resource group is a CSI-RS resource, and an IE for configuring the first RS resource group includes at least one of NZP-CSI-RS-ResourceSet IE and CSI-ResourceConfig IE.

As an embodiment, at least one RS resource in the first RS resource group is a CSI-IM resource, and an IE for configuring the first RS resource group includes at least one of CSI-IM-ResourceSet IE and CSI-ResourceConfig IE.

As an embodiment, at least one RS resource in the first RS resource group is an SS/PBCH block resource, and an IE for configuring the first RS resource group includes at least one of CSI-SSB-ResourceSet IE and CSI-ResourceConfig IE.

As an embodiment, for any given RS resource in the first RS resource group, if the given RS resource is a CSI-RS resource, an IE for configuring the given RS resource includes an NZP-CSI-RS-Resource IE.

As an embodiment, for any given RS resource in the first RS resource group, if the given RS resource is a CSI-IM resource, an IE for configuring the given RS resource includes a CSI-IM-Resource IE.

As an embodiment, the first CSI set is only transmitted on the PUSCHs on the first cell of the K cells.

As an embodiment, the first CSI set is only transmitted on PUSCHs scheduled by the first DCI on the first cell of the K cells.

As an embodiment, the first field in the first DCI is used for triggering reporting of the first CSI.

As an embodiment, the first field in the first DCI indicates a trigger state of the first CSI.

As an embodiment, the first field in the first DCI indicates a trigger state of the CSI-ReportConfig corresponding to the first CSI.

As an embodiment, the trigger state of the CSI-ReportConfig corresponding to the first CSI is configured by RRC signaling.

As an embodiment, the trigger state of the CSI-ReportConfig corresponding to the first CSI is configured by a CSI-AperiodicTriggerStateList IE.

As an embodiment, the first field in the first DCI is used for triggering reporting of the first CSI set.

As an embodiment, the first field in the first DCI is used for triggering reporting of each CSI in the first CSI set.

As an embodiment, the trigger states of all CSIs in the first CSI set are the same.

As an embodiment, the trigger state of the CSI-ReportConfig corresponding to each CSI in the first CSI set is the same.

As an embodiment, the first CSI set includes at least one CSI.

As an embodiment, any CSI in the first CSI set includes at least one of a CQI (Channel Quality Indicator), a PMI (Precoding Matrix Indicator), a CRI (CSI-RS Resource Indicator), an LI (Layer Indicator), an RI (Rank Indicator), an SSBRI (SS/PBCH Block Resource Indicator), an L1-RSRP (Layer 1-Reference Signal Received Power), and an L1-SINR (Layer 1-Signal-to-Interference and Noise Ratio).

As an embodiment, any CSI in the first CSI set includes at least one of a CQI, a PMI, a CRI, an LI, an RI, an SSBRI, an L1-RSRP, an L1-SINR, a capability index, and a capability set index.

As an embodiment, the first CSI set includes an RI.

As an embodiment, the first CSI set includes a CRI.

As an embodiment, the first CSI set includes a CQI.

As an embodiment, the first CSI set includes a PMI.

As an embodiment, the first CSI includes at least one of a CQI, a PMI, a CRI, an LI, an RI, an SSBRI, an L1-RSRP, an L1-SINR, a capability index, and a capability set index.

As an embodiment, the first CSI includes an RI.

As an embodiment, the first CSI includes a CRI.

As an embodiment, the first CSI includes a CQI.

As an embodiment, the first CSI includes a wideband CQI.

As an embodiment, the first CSI includes at least one sub-band CQI.

As an embodiment, the first CSI includes a PMI.

As an embodiment, the first DCI is transmitted on a second cell, and the CSI-ReportConfig corresponding to the first CSI is located on the second cell.

As an embodiment, the CSI-ReportConfig corresponding to the first CSI is located on the first cell.

As an embodiment, the meaning of a CSI-ReportConfig being located on a cell includes that the CSI-ReportConfig is configured on the cell.

As an embodiment, the meaning of a CSI-ReportConfig being located on a cell includes that the CSI-ReportConfig is configured for the cell.

As an embodiment, the meaning of a CSI-ReportConfig being located on a cell includes that a cell configured by an ServingCellConfig IE to which the CSI-ReportConfig belongs is the cell.

As an embodiment, the meaning of a CSI-ReportConfig being located on a cell includes that a cell index indicated by an SpCellConfig or SCellConfig to which the CSI-ReportConfig belongs is equal to a cell index of the cell.

As an embodiment, the first CSI set is composed of the first CSI.

As an embodiment, in addition to the first CSI, the first CSI set further includes at least one CSI.

As an embodiment, any two CSIs in the first CSI set correspond to different CSI-ReportConfigs.

As an embodiment, there are two CSIs in the first CSI set that correspond to the same CSI-ReportConfig.

As an embodiment, the CSI-ReportConfigs corresponding to any two CSIs in the first CSI set are identified by different CSI-ReportConfigIds.

As an embodiment, there are two CSIs in the first CSI set whose corresponding CSI-ReportConfigs are identified by the same CSI-ReportConfigId.

As an embodiment, the CSI-ReportConfig corresponding to any CSI in the first CSI set is located on the first cell.

As an embodiment, the first DCI is transmitted in a second cell, and the CSI-ReportConfig corresponding to any CSI in the first CSI set is located on the second cell.

As an embodiment, there are two CSIs in the first CSI set whose corresponding CSI-ReportConfigs are respectively located on different cells.

As an embodiment, the first CSI set occupies an RE (Resource Element) assigned to the PUSCHs on the first cell.

As an embodiment, the first CSI set adopts the same modulation method as the PUSCHs on the first cell.

Generally speaking, how to calculate CSI is determined by hardware apparatus manufacturers themselves. Taking CQI as an example, a non-limiting implementation will be introduced below:
The first node firstly executes channel measurement on a CSI-RS resource to obtain a channel parameter matrix ***H***_{*r*×}*ₜ,* where *r* and *t* are respectively the number of receiving antennas and the number of antenna ports used for transmission. Under the condition of using a precoding matrix ***W***_{*t*×*l*}, a channel parameter matrix after precoding is ***H***_{*r*×}*ₜ ·**W***_{*t*×}*ₗ,* where *l* is the rank or the number of layers. An equivalent channel capacity of ***H***_{*r*×}*ₜ **W***_{*t*×*l*} is calculated by using criteria such as SINR, EESM (Exponential Effective SINR Mapping), or RBIR (Received Block Mean Mutual Information Ratio), and then a CQI is determined by looking up a table or the like based on the equivalent channel capacity. Generally speaking, the calculation of the equivalent channel capacity requires the first node to estimate noise and interference. Generally speaking, the mapping between equivalent channel capacities and CQI values depends on receiver performance or hardware related factors such as modulation mode. The precoding matrix ***W***_{*t*×*l*} is usually fed back by the first node through an RI or a PMI.

Compared with the CQI, the L1-SINR does not carry receiver information, thus omitting the calculation of the equivalent channel capacity above.

As an embodiment, the measurement executed on the first CSI resource group is used for estimating the channel parameter matrix ***H***_{*r*×*t*}.

As an embodiment, the measurement executed on the first CSI resource group is used for estimating interference and/or noise.

As an embodiment, the first DCI only schedules PUSCHs on the K cells.

As an embodiment, the first DCI schedules PUSCHs on at least one other cell in addition to the K cells.

As an embodiment, the first DCI schedules K PUSCHs, and the K PUSCHs are respectively located on the K cells.

As an embodiment, the first DCI includes scheduling information for the K PUSCHs.

As an embodiment, the scheduling information includes one or more of time-domain resource, frequency-domain resource, MCS (Modulation and Coding Scheme), DMRS (DeModulation Reference Signals) port, HARQ (Hybrid Automatic Repeat Request) process number, RV (Redundancy Version), NDI (New Data Indicator), and TCI (Transmission Configuration Indicator) state.

As an embodiment, the K PUSCHs are respectively transmitted on the K cells.

As an embodiment, frequency-domain resources occupied by the K PUSCHs respectively belong to the K cells.

As an embodiment, the K PUSCHs are respectively the PUSCHs on the K cells.

As an embodiment, the K PUSCHs are respectively the PUSCHs on the K cells scheduled by the first DCI.

As an embodiment, a given PUSCH is any PUSCH of the K PUSCHs, and the given PUSCH is located on a given cell of the K cells; and a cell identity of the given cell or a higher-level parameter "dataScramblingIdentityPUSCH" configured for the given cell is used for determining a scrambling sequence of the given PUSCH.

As an embodiment, a given PUSCH is any PUSCH of the K PUSCHs, and the given PUSCH is located on a given cell of the K cells; and one of a cell identity of the given cell, a higher-level parameter "scramblingID0" configured for the given cell, or a higher-level parameter "scramblingID1" configured for the given cell is used for determining a DMRS sequence of the given PUSCH.

As an embodiment, the cell identity refers to a physical layer cell identity.

As an embodiment, the cell identity refers to a PCI (Physical Cell Identity).

As an embodiment, a first PUSCH is a PUSCH on the first cell of the K PUSCHs, and the first CSI set is transmitted on the first PUSCH.

As a sub-embodiment of the above embodiment, the first CSI set is only transmitted on the first PUSCH of the K PUSCHs.

As a sub-embodiment of the above embodiment, the first CSI set occupies and only occupies an RE assigned to the first PUSCH.

As an embodiment, there are two PUSCHs in the K PUSCHs that occupy frequency-domain resources which are overlapped.

As an embodiment, frequency-domain resources occupied by any two PUSCHs in the K PUSCHs are overlapped.

As an embodiment, the K PUSCHs occupy the same time-domain resources.

As an embodiment, HARQ process numbers corresponding to the K PUSCHs are respectively configured.

As an embodiment, NDIs corresponding to the K PUSCHs are respectively configured.

As an embodiment, RVs corresponding to the K PUSCHs are respectively configured.

As an embodiment, the first DCI only schedules the K PUSCHs.

As an embodiment, the first DCI schedules at least one other PUSCH in addition to the K PUSCHs, and any PUSCH of the at least one other PUSCH is located on a cell other than the K cells.

As a sub-embodiment of the above embodiment, the first DCI includes scheduling information for any PUSCH of the at least one other PUSCH.

As an embodiment, the second field in the first DCI is used by the first node for determining the interpretation of the first field in the first DCI.

As an embodiment, candidate values of the first field in the first DCI include N candidate values, where N is a positive integer greater than 1; the N candidate values respectively correspond to N CSI-ReportConfig sets; the CSI-ReportConfig corresponding to the first CSI belongs to a CSI-ReportConfig set of the N CSI-ReportConfig sets that corresponds to a value of the first field in the first DCI; a corresponding between the N candidate values and the N CSI-ReportConfig sets is configured by a first IE; and any CSI-ReportConfig set of the N CSI-ReportConfig sets includes at least one CSI-ReportConfig.

As a sub-embodiment of the above embodiment, the N candidate values respectively indicate the N CSI-ReportConfig sets.

As a sub-embodiment of the above embodiment, the name of the first IE includes "CSI-AperiodicTriggerStateList".

As a sub-embodiment of the above embodiment, the first IE is a CSI-AperiodicTriggerStateList IE.

As a sub-embodiment of the above embodiment, the CSI-ReportConfig corresponding to any CSI in the first CSI set belongs to a CSI-ReportConfig set of the N CSI-ReportConfig sets that corresponds to a value of the first field in the first DCI.

As a sub-embodiment of the above embodiment, the first IE is one of M candidate IEs, where M is a positive integer greater than 1; and the M candidate IEs correspond to M cells one to one, and the M candidate IEs are respectively configured for the M cells.

As a reference embodiment of the above sub-embodiment, the second field in the first DCI is used for determining the first IE from the M candidate IEs.

As a reference embodiment of the above sub-embodiment, the M cells include the first cell, and the first IE is a candidate IE of the M candidate IEs that corresponds to the first cell.

As a reference embodiment of the above sub-embodiment, the first DCI is transmitted on a second cell, and the M cells include the second cell; and the first IE is a candidate IE of the M candidate IEs that corresponds to the second cell.

As a reference embodiment of the above embodiment, the M candidate IEs respectively include CSI-AperiodicTriggerStateList IEs configured for the M cells.

As an embodiment, the first message set includes M messages, where M is a positive integer greater than 1; the first message is one of the M messages; and the M messages correspond to M cells one to one, and the M messages are respectively configured for the M cells.

As a sub-embodiment of the above embodiment, the second field in the first DCI is used for determining the first message from the M messages.

As a sub-embodiment of the above embodiment, the first message is a message of the M messages that is configured for the first cell.

As a sub-embodiment of the above embodiment, the first DCI is transmitted on a second cell, and the first message is a message of the M messages that is configured to the second cell.

As a sub-embodiment of the above embodiment, the M messages respectively belong to M ServingCellConfig IEs, and the M ServingCellConfig IEs are respectively used for configuring the M cells.

As a sub-embodiment of the above embodiment, the first node determines the CSI-ReportConfig corresponding to the first CSI by determining the first message.

As a sub-embodiment of the above embodiment, the first node determines the CSI-MeasConfig IE to which the CSI-ReportConfig corresponding to the first CSI belongs by determining the first message.

As a sub-embodiment of the above embodiment, there are two messages in the M messages that are transmitted in different PDSCHs.

As a sub-embodiment of the above embodiment, there are two messages in the M messages that are transmitted in the same PDSCH.

As an embodiment, the second field in the first DCI is used for determining the first cell from the K cells.

As an embodiment, the second field in the first DCI is used by the first node for determining the first cell from the K cells.

As an embodiment, the meaning of the second field in the first DCI being used for determining the first cell includes that the second field in the first DCI is used for determining that the first CSI set is transmitted on the PUSCH of the first cell.

As an embodiment, the meaning of the second field in the first DCI being used for determining the first cell includes that the second field in the first DCI is used for determining that the first CSI set is transmitted on the PUSCH of the first cell of the K cells.

### Embodiment 2

Embodiment 2 exemplifies a schematic diagram of a network architecture according to an embodiment of the present application, as shown in FIG. 2.

FIG. 2 illustrates a network architecture 200 of LTE (Long-Term Evolution), LTE-A (Long-Term Evolution Advanced), and future 5G systems. The network architecture 200 of the LTE, LTE-A, and future 5G systems is referred to as an EPS (Evolved Packet System) 200. The 5G NR or LTE network architecture 200 may be referred to as a 5GS (5G System)/EPS (Evolved Packet System) 200 or some other suitable terminology. The 5GS/EPS 200 may include one or more UE (User Equipment) 201, UE 241 for sidelink communication with the UE 201, an NG-RAN (Next Generation Radio Access Network) 202, a 5GC (5G CoreNetwork)/EPC (Evolved Packet Core) 210, an HSS (Home Subscriber Server)/UDM (Unified Data Management) 220, and an Internet service 230. The 5GS/EPS 200 may be interconnected with other access networks, but these entities/interfaces are not shown for the sake of simplicity. Referring to FIG. 2, the 5GS/EPS 200 provides packet switching services. However, those skilled in the art will readily understand that various concepts presented throughout the present application may be extended to networks providing circuit switching services. The NG-RAN 202 includes an NR (New Radio) Node B (gNB) 203 and another gNB 204. The gNB 203 provides termination of user and control plane protocols towards the UE 201. The gNB 203 may be connected to the other gNB 204 through an Xn interface (e.g., return). The gNB 203 may also be referred to as a base station, a base transceiver station, a radio base station, a radio transceiver, a transceiver function, a basic service set (BSS), an extended service set (ESS), a TRP (Transmission/Reception Point), or some other suitable terminology. The gNB 203 provides an access point for the UE 201 to the 5GC/EPC 210. Examples of the UE 201 include cellular phones, smart phones, session initiation protocol (SIP) phones, laptops, personal digital assistants (PDAs), satellite radios, global positioning systems, multimedia devices, video devices, digital audio players (e.g., MP3 players), cameras, game consoles, drones, aircrafts, narrowband physical network apparatuses, machine type communication apparatuses, land vehicles, automobiles, wearable apparatuses, or any other similar functional devices. Those skilled in the art may also call the UE 201 a mobile station, a subscriber station, a mobile unit, a subscriber unit, a wireless unit, a remote unit, a mobile device, a wireless device, a wireless communication device, a remote device, a mobile subscriber station, an access terminal, a mobile terminal, a wireless terminal, a remote terminal, a handset, a user agent, a mobile client, a client, or some other suitable terminology. The gNB 203 is connected to the 5GC/EPC 210 through an S1/NG interface. The 5GC/EPC 210 includes an MME (Mobility Management Entity)/AMF (Authentication Management Field)/SMF (Session Management Function) 211, another MME/AMF/SMF 214, an S-GW (Service Gateway)/UPF (User Plane Function) 212, and a P-GW (Packet Data Network Gateway)/UPF 213. The MME/AMF/SMF 211 is a control node that handles signaling between the UE 201 and the 5GC/EPC 210. In general, the MME/AMF/SMF 211 provides bearer and connection management. All user IP (Internet Protocal) packets are transmitted through the S-GW/UPF 212, and the S-GW/UPF 212 itself is connected to the P-GW/UPF 213. The P-GW provides UE IP address allocation and other functions. The P-GW/UPF 213 is connected to the Internet service 230. The Internet service 230 includes Internet Protocol services corresponding to operators, which specifically may include Internet, Intranet, IMS (IP Multimedia Subsystem), and packet switching services.

As an embodiment, the first node in the present application includes the UE 201.

As an embodiment, the second node in the present application includes the gNB 203.

As an embodiment, a wireless link between the UE 201 and the gNB 203 includes a cellular network link.

As an embodiment, a transmitter of the first message set includes the gNB 203.

As an embodiment, a receiver of the first message set includes the UE 201.

As an embodiment, a transmitter of the first DCI includes the gNB 203.

As an embodiment, a receiver of the first DCI includes the UE 201.

As an embodiment, a transmitter of the first CSI set includes the UE 201.

As an embodiment, a receiver of the first CSI set includes the gNB 203.

As an embodiment, the UE 201 supports a function that a single DCI schedules PDSCHs/PUSCHs of multiple cells.

### Embodiment 3

Embodiment 3 exemplifies a schematic diagram of an embodiment of a radio protocol architecture for a user plane and a control plane according to an embodiment of the present application, as shown in FIG. 3.

Embodiment 3 shows a schematic diagram of an embodiment of a radio protocol architecture for a user plane and a control plane according to the present application, as shown in FIG. 3. FIG. 3 is a schematic diagram describing an embodiment of a radio protocol architecture for a user plane 350 and a control plane 300. FIG. 3 shows the radio protocol architecture for the control plane 300 between a first communication node apparatus (UE, gNB or RSU in V2X) and a second communication node apparatus (gNB, RSU in UE or V2X), or between two UEs, by using three layers including a layer 1, a layer 2 and a layer 3. The layer 1 (L1 layer) is the lowest layer and implements various PHY (physical layer) signal processing functions. The L1 layer is referred to as a PHY 301 herein. The layer 2 (L2 layer) 305 is located above the PHY 301 and is responsible for the link between the first communication node apparatus and the second communication node apparatus, or between two UEs. The L2 layer 305 includes an MAC (Medium Access Control) sublayer 302, an RLC (Radio Link Control) sublayer 303, and a PDCP (Packet Data Convergence Protocol) sublayer 304. These sublayers terminate at the second communication node apparatus. The PDCP sublayer 304 provides multiplexing between different radio bearers and logical channels. The PDCP sublayer 304 further provides security by encrypting data packets, and provides handover support for the first communication node apparatus between the second communication node apparatuses. The RLC sublayer 303 provides segmentation and reassembly of upper layer packets, retransmission of lost packets, and reordering of packets to compensate for unordered reception caused by HARQ. The MAC sublayer 302 provides multiplexing between logical and transport channels. The MAC sublayer 302 is further responsible for allocating various radio resources (e.g., resource blocks) in a cell between the first communication node apparatuses. The MAC sublayer 302 is further responsible for HARQ operation. An RRC (Radio Resource Control) sublayer 306 in layer 3 (L3 layer) of the control plane 300 is responsible for obtaining radio resources (i.e., radio bearers) and configuring a lower layer by using RRC signaling between the second communication node apparatus and the first communication node apparatus. The radio protocol architecture of the user plane 350 includes a layer 1 (L1 layer) and a layer 2 (L2 layer). For the radio protocol architecture used for the first communication node apparatus and the second communication node apparatus in the user plane 350, a physical layer 351, a PDCP sublayer 354 in the L2 layer 355, an RLC sublayer 353 in the L2 layer 355, and an MAC sublayer 352 in the L2 layer 355 are generally the same as corresponding layers and sublayers in the control plane 300. However, the PDCP sublayer 354 further provides header compression for upper layer data packets to reduce radio transmission overhead. The L2 layer 355 in the user plane 350 further includes an SDAP (Service Data Adaptation Protocol) sublayer 356. The SDAP sublayer 356 is responsible for mapping between QoS streams and Data Radio Bearers (DRBs) to support service diversity. Although not shown, the first communication node apparatus may have several upper layers above the L2 layer 355, including a network layer (e.g., IP layer) terminating at the P-GW on the network side and an application layer terminating at the other end of the connection (e.g., remote UE and server).

As an embodiment, the radio protocol architecture in FIG. 3 is applicable to the first node in the present application.

As an embodiment, the radio protocol architecture in FIG. 3 is applicable to the second node in the present application.

As an embodiment, the first message set is generated in the RRC sublayer 306.

As an embodiment, the first DCI is generated in the PHY 301 or the PHY 351.

As an embodiment, the first CSI set is generated in the PHY 301 or the PHY 351.

As an embodiment, the higher layer referred to in the present application refers to a layer above the physical layer.

### Embodiment 4

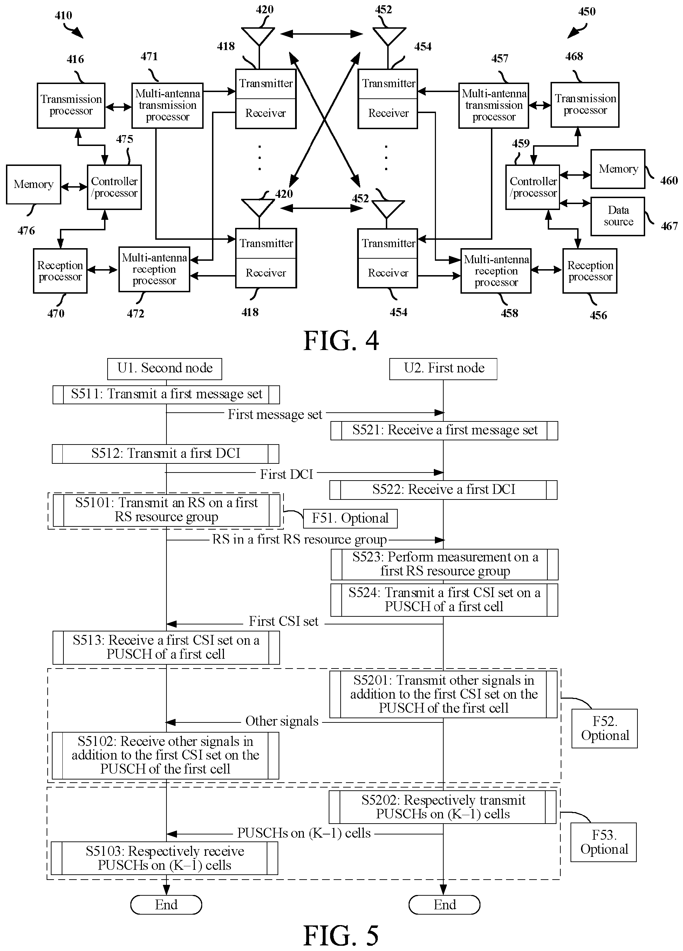

Embodiment 4 exemplifies a schematic diagram of a first communication apparatus and a second communication apparatus according to an embodiment of the present application, as shown in FIG. 4. FIG. 4 is a block diagram of a first communication apparatus 410 and a second communication apparatus 450 communicating with each other in an access network.

The first communication apparatus 410 includes a controller/processor 475, a memory 476, a reception processor 470, a transmission processor 416, a multi-antenna reception processor 472, a multi-antenna transmission processor 471, transmitters/receivers 418, and antennas 420.

The second communication apparatus 450 includes a controller/processor 459, a memory 460, a data source 467, a transmission processor 468, a reception processor 456, a multi-antenna transmission processor 457, a multi-antenna reception processor 458, transmitters/receivers 454, and antennas 452.

In the transmission from the first communication apparatus 410 to the second communication apparatus 450, at the first communication apparatus 410, upper layer data packets from the core network are provided to the controller/processor 475. The controller/processor 475 implements the functions of the L2 layer. In DL, the controller/processor 475 provides header compression, encryption, packet segmentation and reordering, multiplexing between logical and transport channels, and radio resource allocation for the second communication apparatus 450 based on various priority metrics. The controller/processor 475 is further responsible for HARQ operation, retransmission of lost packets, and signaling to the second communication apparatus 450. The transmission processor 416 and the multi-antenna transmission processor 471 implement various signal processing functions for the L1 layer (i.e., physical layer). The transmission processor 416 implements encoding and interleaving to facilitate forward error correction (FEC) at the second communication apparatus 450, as well as constellation mapping based on various modulation schemes (such as binary phase shift keying (BPSK), quadrature phase shift keying (QPSK), M-phase shift keying (M-PSK), and M-quadrature amplitude modulation (M-QAM)). The multi-antenna transmission processor 471 executes digital spatial precoding on encoded and modulated symbols, including codebook based precoding and non-codebook based precoding, as well as beamforming processing, to generate one or more parallel streams. The transmission processor 416 then maps each parallel stream to a subcarrier, multiplies the modulated symbols with a reference signal (e.g., pilot) in the time and/or frequency domain, and subsequently uses an inverse fast Fourier transform (IFFT) to generate a physical channel carrying a time-domain multi-carrier symbol stream. Then, the multi-antenna transmission processor 471 executes transmission analog precoding/beamforming operations on the time-domain multi-carrier symbol stream. Each transmitter 418 converts a baseband multi-carrier symbol stream provided by the multi-antenna transmission processor 471 into a radio-frequency stream, which is then provided to different antennas 420.

In the transmission from the first communication apparatus 410 to the second communication apparatus 450, at the second communication apparatus 450, each receiver 454 receives signals through its corresponding antenna 452. Each receiver 454 recovers the modulated information onto the radio-frequency carrier and converts the radio-frequency stream into a baseband multi-carrier symbol stream, which is provided to the reception processor 456. The reception processor 456 and the multi-antenna reception processor 458 implement various signal processing functions of the L1 layer. The multi-antenna reception processor 458 executes reception analog precoding/beamforming operations on the baseband multi-carrier symbol stream from the receiver 454. The reception processor 456 uses fast Fourier transform (FFT) to convert the baseband multi-carrier symbol stream after the reception analog precoding/beamforming operations from the time domain to the frequency domain. In the frequency domain, the physical layer data signal and reference signal are demultiplexed by the reception processor 456, where the reference signal will be used for channel estimation, and the data signal is detected by multiple antennas in the multi-antenna reception processor 458 to recover any parallel stream destined for the second communication apparatus 450. Symbols on each parallel stream are demodulated and recovered in the reception processor 456 to generate a soft decision. Then, the reception processor 456 decodes and de-interleaves the soft decision to recover the upper layer data and control signals transmitted by the first communication apparatus 410 on the physical channel. Then, the upper layer data and control signals are provided to the controller/processor 459. The controller/processor 459 implements the functions of the L2 layer. The controller/processor 459 may be associated with the memory 460 that stores program codes and data. The memory 460 may be referred to as a computer-readable medium. In DL, the controller/processor 459 provides multiplexing between transmission and logical channels, packet reassembly, decryption, header decompression, and control signal processing to recover upper layer data packets from the core network. Then, the upper layer packets are provided to all protocol layers above the L2 layer. Various control signals may also be provided to L3 for L3 processing. The controller/processor 459 is further responsible for error detection using acknowledgment (ACK) and/or negative acknowledgment (NACK) protocols to support HARQ operations.

In the transmission from the second communication apparatus 450 to the first communication apparatus 410, at the second communication apparatus 450, the data source 467 is used for providing the upper layer data packets to the controller/processor 459. The data source 467 represents all protocol layers above the L2 layer. Similar to the transmission function at the first communication apparatus 410 described in DL, the controller/processor 459 implements header compression, encryption, packet segmentation and reordering, as well as multiplexing between logical and transmission channels based on the radio resource allocation of the first communication apparatus 410, to implement the L2 layer functions of the user plane and the control plane. The controller/processor 459 is further responsible for HARQ operation, retransmission of lost packets, and signaling to the first communication apparatus 410. The transmission processor 468 executes modulation mapping and channel coding processing, while the multi-antenna transmission processor 457 executes digital multi-antenna spatial precoding, including codebook based precoding and non-codebook based precoding, as well as beamforming processing. Then, the transmission processor 468 modulates the generated parallel streams into a multi-carrier/single-carrier symbol stream, which is then subjected to analog precoding/beamforming operations in the multi-antenna transmission processor 457 and provided to different antennas 452 through the transmitters 454. Each transmitter 454 firstly converts the baseband symbol stream provided by the multi-antenna transmission processor 457 into a radio-frequency symbol stream, and then provides it to the antenna 452.

In the transmission from the second communication apparatus 450 to the first communication apparatus 410, the function at the first communication apparatus 410 is similar to the receiving function at the second communication apparatus 450 described in the transmission from the first communication apparatus 410 to the second communication apparatus 450. Each receiver 418 receives the radio-frequency signal through its corresponding antenna 420, converts the received radio-frequency signal into a baseband signal, and provides the baseband signal to the multi-antenna reception processor 472 and the reception processor 470. The reception processor 470 and the multi-antenna reception processor 472 jointly implement the functions of the L1 layer. The controller/processor 475 implements the functions of the L2 layer. The controller/processor 475 may be associated with the memory 476 that stores program codes and data. The memory 476 may be referred to as a computer-readable medium. The controller/processor 475 provides multiplexing between transmission and logical channels, packet reassembly, decryption, header decompression, and control signal processing to recover upper layer data packets from the second communication apparatus 450. The upper layer data packets from the controller/processor 475 may be provided to the core network. The controller/processor 475 is further responsible for error detection using ACK and/or NACK protocols to support HARQ operations.

As an embodiment, the second communication apparatus 450 includes at least one processor and at least one memory, where the at least one memory includes a computer program code; and the at least one memory and the computer program code are configured for use with the at least one processor. The second communication apparatus 450 receives at least the first message set and the first DCI, and executes measurement on the first RS resource group; and transmits the first CSI set on a PUSCH of the first cell. The first message set includes a first message, and the first DCI includes a first field and a second field; the first CSI set includes a first CSI; the first DCI is used for scheduling PUSCHs on at least K cells, and K is a positive integer greater than 1; the first cell is one of the K cells; the first field in the first DCI is used for triggering the first CSI; the second field in the first DCI is used for determining the first cell; and the measurement executed on the first RS resource group is used for calculating the first CSI, and the first message is used to indicate the first RS resource group.

As an embodiment, the second communication apparatus 450 includes a memory for storing a computer-readable instruction program, where the computer-readable instruction program, when executed by at least one processor, generates actions including: receiving the first message set and the first DCI, and executing measurement on the first RS resource group; and transmitting the first CSI set on a PUSCH of the first cell.

As an embodiment, the first communication apparatus 410 includes at least one processor and at least one memory, where the at least one memory includes a computer program code; and the at least one memory and the computer program code are configured for use with the at least one processor. The first communication apparatus 410 transmits at least the first message set and the first DCI; and receives the first CSI set on a PUSCH of the first cell. The first message set includes a first message, and the first DCI includes a first field and a second field; the first CSI set includes a first CSI; the first DCI is used for scheduling PUSCHs on at least K cells, and K is a positive integer greater than 1; the first cell is one of the K cells; the first field in the first DCI is used for triggering the first CSI; the second field in the first DCI is used for determining the first cell; and measurement executed on a first RS resource group is used for calculating the first CSI, and the first message is used to indicate the first RS resource group.

As an embodiment, the first communication apparatus 410 includes a memory for storing a computer-readable instruction program, where the computer-readable instruction program, when executed by at least one processor, generates actions including: transmitting the first message set and the first DCI; and receiving the first CSI set on a PUSCH of the first cell.

As an embodiment, the first node in the present application includes the second communication apparatus 450.

As an embodiment, the second node in the present application includes the first communication apparatus 410.

As an embodiment, at least one of {the antennas 452, the receivers 454, the reception processor 456, the multi-antenna reception processor 458, the controller/processor 459, the memory 460, and the data source 467} is used for receiving the first message set; and at least one of {the antennas 420, the transmitters 418, the transmission processor 416, the multi-antenna transmission processor 471, the controller/processor 475, and the memory 476} is used for transmitting the first message set.

As an embodiment, at least one of {the antennas 452, the receivers 454, the reception processor 456, the multi-antenna reception processor 458, the controller/processor 459, the memory 460, and the data source 467} is used for receiving the first DCI; and at least one of {the antennas 420, the transmitters 418, the transmission processor 416, the multi-antenna transmission processor 471, the controller/processor 475, and the memory 476} is used for transmitting the first DCI.

As an embodiment, at least one of {the antennas 452, the receivers 454, the reception processor 456, the multi-antenna reception processor 458, the controller/processor 459, the memory 460, and the data source 467} is used for executing the measurement on the first RS resource group.

As an embodiment, at least one of {the antennas 420, the receivers 418, the reception processor 470, the multi-antenna reception processor 472, the controller/processor 475, and the memory 476} is used for receiving the first CSI set on the PUSCH of the first cell; and at least one of {the antennas 452, the transmitters 454, the transmission processor 468, the multi-antenna transmission processor 457, the controller/processor 459, the memory 460, and the data source 467} is used for transmitting the first CSI set on the PUSCH of the first cell.

### Embodiment 5

Embodiment 5 exemplifies a flowchart of transmission according to an embodiment of the present application, as shown in FIG. 5. In FIG. 5, a second node U1 and a first node U2 are communication nodes for transmission through an air interface. In FIG. 5, steps in blocks F51 to F53 are respectively optional.

The second node U1, in step S511, transmits a first message set; in step S512, transmits a first DCI; in step S5101, transmits an RS on a first RS resource group; in step S513, receives a first CSI set on a PUSCH of a first cell; in step S5102, receives other signals in addition to the first CSI set on the PUSCH of the first cell; and in step S5103, respectively receives PUSCHs on (K-1) cells.

The first node U2, in step S521, receives a first message set; in step S522, receives a first DCI; in step S523, executes measurement on a first RS resource group; in step S524, transmits a first CSI set on a PUSCH of a first cell; in step S5201, transmits other signals in addition to the first CSI set on the PUSCH of the first cell; and in step S5202, respectively transmits PUSCHs on (K-1) cells.

In embodiment 5, the first message set includes a first message, and the first DCI includes a first field and a second field; the first CSI set includes a first CSI; the first DCI is used for scheduling PUSCHs on at least K cells, and K is a positive integer greater than 1; the first cell is one of the K cells; the first field in the first DCI is used for triggering the first CSI; the second field in the first DCI is used by the first node U2 for determining the first cell; and the measurement executed on the first RS resource group is used by the first node U2 for calculating the first CSI, and the first message is used to indicate the first RS resource group.

As an embodiment, the first node U2 is the first node in the present application.

As an embodiment, the second node U1 is the second node in the present application.

As an embodiment, the air interface between the second node U1 and the first node U2 includes a wireless interface between the base station apparatus and the user equipment.

As an embodiment, the air interface between the second node U1 and the first node U2 includes a wireless interface between the relay node apparatus and the user equipment.

As an embodiment, the air interface between the second node U1 and the first node U2 includes a wireless interface between the user equipment and the user equipment.

As an embodiment, the second node U1 is a serving cell maintenance base station of the first node U2.

As an embodiment, the first DCI is used by the second node U1 for scheduling PUSCHs on at least K cells.

As an embodiment, the first message set is transmitted in a PDSCH.

As an embodiment, the first message is transmitted in a PDSCH.

As an embodiment, each message in the first message set is transmitted in a PDSCH.

As an embodiment, the first DCI is transmitted in a PDSCH.

As an embodiment, the step in block F51 in FIG. 5 exists, and the method used in the second node for wireless communication includes transmitting an RS on the first RS resource group.

As a sub-embodiment of the above embodiment, the RS is transmitted on at least one RS resource in the first RS resource group.

As an embodiment, the step in block F52 in FIG. 5 exists, and the method used in the first node for wireless communication includes transmitting other signals in addition to the first CSI set on the PUSCH of the first cell.

As an embodiment, the step in block F52 in FIG. 5 exists, and the method used in the second node for wireless communication includes receiving other signals in addition to the first CSI set on the PUSCH of the first cell.

As an embodiment, the step in block F53 in FIG. 5 exists, and the method used in the first node for wireless communication includes respectively transmitting PUSCHs on (K-1) cells; and the (K-1) cells are composed of all cells of the K cells except the first cell.

As an embodiment, the PUSCHs respectively transmitted on the (K-1) cells are respectively the PUSCHs on the (K-1) cells scheduled by the first DCI.

As an embodiment, the PUSCHs respectively transmitted on the (K-1) cells are respectively the PUSCHs of the K PUSCHs that are located on the (K-1) cells.

As an embodiment, the step in block F53 in FIG. 5 exists, and the method used in the second node for wireless communication includes respectively receiving PUSCHs on (K-1) cells; and the (K-1) cells are composed of all cells of the K cells except the first cell.

### Embodiment 6

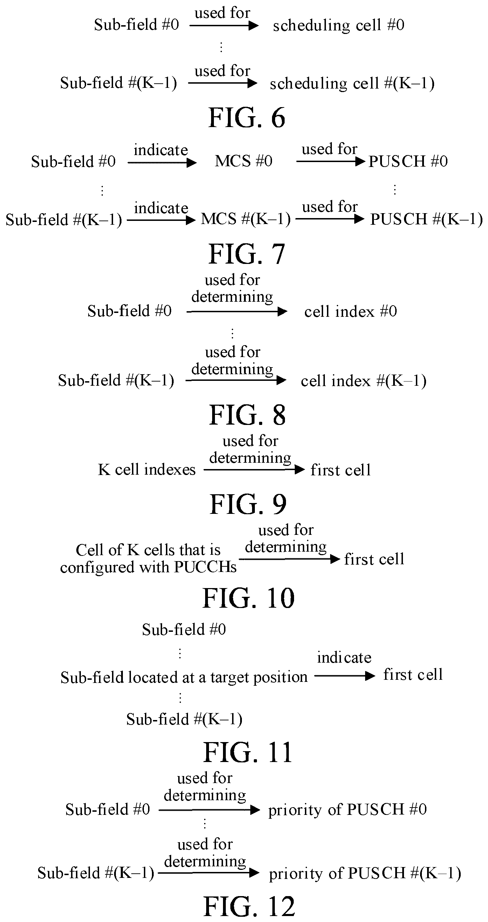

Embodiment 6 exemplifies a schematic diagram of K sub-fields according to an embodiment of the present application, as shown in FIG. 6. In embodiment 6, the first DCI includes K sub-fields, and the K sub-fields are respectively used for scheduling the K cells. In FIG. 6, the K sub-fields are respectively represented as sub-field #0, ..., and sub-field #(K-1); and the K cells are respectively represented as cell #0, ..., and cell #(K-1).

As an embodiment, the K sub-fields respectively include at least one bit.

As an embodiment, any sub-field of the K sub-fields includes partial or all bits in a DCI field.

As an embodiment, any sub-field of the K sub-fields includes partial bits in a DCI field.

As an embodiment, any sub-field of the K sub-fields includes a DCI field.

As an embodiment, any sub-field of the K sub-fields is a DCI field.

As an embodiment, there are two sub-fields in the K sub-fields that respectively include different bits in the same DCI field.

As an embodiment, the K sub-fields respectively include different bits in the same DCI field.

As an embodiment, there are two sub-fields in the K sub-fields that respectively include two different DCI fields.

As an embodiment, the K sub-fields respectively include K different DCI fields.

As an embodiment, the K sub-fields are respectively K different DCI fields.

As an embodiment, the first DCI includes P different DCI fields, where P is a positive integer greater than 1; and any sub-field of the K sub-fields includes partial bits in each CDI field of the P different DCI fields.

As a sub-embodiment of the above embodiment, for any given DCI field of the P different DCI fields, any two sub-fields of the K sub-fields include different (one or more) bits in the given DCI field.

As an embodiment, the K sub-fields are arranged sequentially in the first DCI.

As an embodiment, the second field in the first DCI includes the K sub-fields.

As an embodiment, the second field in the first DCI includes only partial sub-fields of the K sub-fields.

As an embodiment, the second field in the first DCI is composed of the K sub-fields.

As an embodiment, the second field in the first DCI includes partial or all bits in at least one DCI field different from the K sub-fields.

As an embodiment, the second field in the first DCI includes partial or all bits in a third field, the third field is a DCI field, and the third field does not include bits in any sub-field of the K sub-fields.

As a sub-embodiment of the above embodiment, the third field does not include bits in a DCI field to which any sub-field of the K sub-fields belong.

### Embodiment 7

Embodiment 7 exemplifies a schematic diagram of K sub-fields respectively used to indicate K MCSs according to an embodiment of the present application, as shown in FIG. 7. In embodiment 7, the K sub-fields respectively indicate K MCSs, the K MCSs are respectively used for K PUSCHs, and the K PUSCHs are respectively located on the K cells. In FIG. 7, the K sub-fields are respectively represented as sub-field #0, ..., and sub-field #(K-1); the K MCSs are respectively represented as MCS #0, ..., and MCS #(K-1); and the K PUSCHs are respectively represented as PUSCH #0, ..., and PUSCH #(K-1).

As an embodiment, the MCS refers to modulation and coding scheme.

As an embodiment, any sub-field of the K sub-fields includes all or partial bits in a DCI field modulation and coding scheme.

As an embodiment, the K sub-fields respectively include different bits in a DCI field modulation and coding scheme.

As an embodiment, the K sub-fields respectively include all or partial bits in K DCI field modulation and coding schemes.

As an embodiment, the K sub-fields respectively include K DCI field modulation and coding schemes.

As an embodiment, the K sub-fields are respectively K DCI field modulation and coding schemes.

As an embodiment, the K sub-fields respectively indicate MCS indexes corresponding to the K MCSs.

As an embodiment, the K MCSs are respectively MCSs of the K PUSCHs.

As an embodiment, there are two different MCSs in the K MCSs.

As an embodiment, there are two same MCSs in the K MCSs.

As an embodiment, frequency-domain resources occupied by the K PUSCHs respectively belong to the K cells.

As an embodiment, the K PUSCHs are respectively transmitted on the K cells.

As an embodiment, the K MCSs are used for determining the first cell.

As an embodiment, the K MCSs are used for determining that the first CSI set is transmitted on the PUSCHs of the first cell of the K cells.

As an embodiment, the meaning of the second field in the first DCI being used for determining the first cell includes that the second field includes at least one of the K sub-fields, the K sub-fields respectively indicate the K MCSs, and the K MCSs are used for determining the first cell.

As an embodiment, the meaning of the second field in the first DCI being used for determining the first cell includes that the second field includes at least one of the K sub-fields, the K sub-fields respectively indicate the K MCSs, and the K MCSs are used for determining that the first CSI set is transmitted on the PUSCHs of the first cell of the K cells.

As an embodiment, the first node determines the first cell according to the K MCSs.

As an embodiment, a cell with a higher MCS of the K cells is preferentially selected as the first cell.

As an embodiment, the first cell is a cell with the highest MCS of the K cells.

As an embodiment, the first cell is a cell with the greatest MCS index of the K cells.

As an embodiment, the first cell is a cell with the highest MCS frequency-domain efficiency of the K cells.

As an embodiment, a first MCS of the K MCSs is used for the PUSCHs on the first cell, and the first MCS is the highest one of the K MCSs.

As an embodiment, the meaning of an MCS being higher than another MCS includes that an MCS index of the MCS is greater than an MCS index of the other MCS; and the MCS and the other MCS belong to the same MCS index table.

As an embodiment, the meaning of an MCS being higher than another MCS includes that the spectral efficiency of the MCS is greater than that of the other MCS.

As an embodiment, in a case that other parameters are the same, a cell with a higher MCS of the K cells is preferentially selected as the first cell.

As a sub-embodiment of the above embodiment, the other parameters include parameters except the MCSs that influence the determination of the first cell.

As a sub-embodiment of the above embodiment, the other parameters include priorities.

As a sub-embodiment of the above embodiment, the other parameters include cell indexes.

As a sub-embodiment of the above embodiment, the other parameters include whether PUCCHs are configured.

As a sub-embodiment of the above embodiment, the K cells have the same other parameters.

As a sub-embodiment of the above embodiment, the first cell is a cell with the highest MCS of the K cells.

As a sub-embodiment of the above embodiment, the first DCI is used for scheduling PUSCHs on K4 cells, K4 is a positive integer greater than K, and at least one cell of the K4 cells does not belong to the K cells; and the K cells are composed of all cells of the K4 cells that have the same other parameters.

As an embodiment, in a case that there are K1 cells in the K cells whose MCSs are the same as the highest MCS of the K MCSs and K1 is a positive integer greater than 1, other parameters are used for determining the first cell.

As a sub-embodiment of the above embodiment, the other parameters include parameters except the MCSs that influence the determination of the first cell.

As a sub-embodiment of the above embodiment, the other parameters include priorities.

As a sub-embodiment of the above embodiment, the other parameters include cell indexes.

As a sub-embodiment of the above embodiment, the other parameters include whether PUCCHs are configured.

As a sub-embodiment of the above embodiment, the other parameters are used for determining the first cell from the K1 cells.

As an embodiment, the meaning of two MCSs being the same includes that the two MCSs belong to the same MCS index table and have the same MCS index.

As an embodiment, the meaning of two MCSs being the same includes that the spectral efficiency of the two MCSs is the same.

As an embodiment, the MCSs of the K cells are respectively the K MCSs.

As an embodiment, in a case that there are K1 cells in the K cells whose MCSs are the same as the highest MCS of the K MCSs and K1 is a positive integer greater than 1, the cell indexes of the K1 cells are used for determining the first cell from the K1 cells.

As a sub-embodiment of the above embodiment, the first cell is a cell with the smallest cell index of the K1 cells.

As a sub-embodiment of the above embodiment, the first cell is a cell with the greatest cell index of the K1 cells.

As an embodiment, in a case that there are K1 cells in the K cells whose MCSs are the same as the highest MCS of the K MCSs and K1 is a positive integer greater than 1, the first cell is a cell of the K1 cells that is configured with PUCCHs.

As an embodiment, in a case that there are K1 cells in the K cells whose MCSs are the same as the highest MCS of the K MCSs and K1 is a positive integer greater than 1, the first cell is a cell with the highest priority of the K1 cells.

As an embodiment, in a case that there are K1 cells in the K cells whose MCSs are the same as the highest MCS of the K MCSs and K1 is a positive integer greater than 1, the first cell is a cell indicated by a sub-field of the K1 sub-fields that ranks first in the first DCI; and the K1 sub-fields are sub-fields of the K sub-fields that are respectively used for scheduling the K1 cells.

As an embodiment, in a case that there are K1 cells in the K cells whose MCSs are the same as the highest MCS of the K MCSs and K1 is a positive integer greater than 1, the first cell is a cell indicated by a sub-field of the K1 sub-fields that ranks the last in the first DCI; and the K1 sub-fields are sub-fields of the K sub-fields that are respectively used for scheduling the K1 cells.

### Embodiment 8

Embodiment 8 exemplifies a schematic diagram of K sub-fields respectively used for determining K cell indexes according to an embodiment of the present application, as shown in FIG. 8. In embodiment 8, the K sub-fields are respectively used by the first node for determining K cell indexes, and the K cell indexes are respectively assigned to the K cells. In FIG. 8, the K sub-fields are respectively represented as sub-field #0, ..., and sub-field #(K-1); and the K cell indexes are respectively represented as cell index #0, ..., and cell index #(K-1).

As an embodiment, any sub-field of the K sub-fields includes all or partial bits in a DCI field carrier indicator.

As an embodiment, the K sub-fields respectively include different bits in a DCI field carrier indicator.

As an embodiment, the K sub-fields respectively include all or partial bits in K DCI field carrier indicators.

As an embodiment, the K sub-fields respectively include K DCI field carrier indicators.

As an embodiment, the K sub-fields are respectively K DCI field carrier indicators.

As an embodiment, any cell index of the K cell indexes includes an ServCellIndex or an SCellIndex.

As an embodiment, the ServCellIndex and the SCellIndex are as defined in 3GPP TS38.331.

As an embodiment, the K cell indexes are respectively non-negative integers.

As an embodiment, the K cell indexes are respectively non-negative integers not greater than 32.

As an embodiment, every two of the K cell indexes are not equal.

As an embodiment, the K cell indexes are respectively used for identifying the K cells.

As an embodiment, the K cell indexes are respectively the cell indexes of the K cells.

As an embodiment, the K sub-fields respectively indicate the K cell indexes.

As an embodiment, the K sub-fields respectively and explicitly indicate the K cell indexes.

As an embodiment, the K sub-fields respectively indicate codepoints of carrier indicator fields corresponding to the K cell indexes.

As an embodiment, the K sub-fields respectively indicate values of carrier indicator fields corresponding to the K cell indexes.

As an embodiment, the K sub-fields respectively and implicitly indicate the K cell indexes.

As an embodiment, the K sub-fields are used for determining the K cells.

As an embodiment, the second field in the first DCI is used for determining the K cells.

As an embodiment, the K sub-fields respectively indicate the K cells.

As an embodiment, the K sub-fields belong to K0 sub-fields, where K0 is a positive integer not less than K; the K0 sub-fields correspond to K0 cell indexes, and the K cell indexes belong to the K0 cell indexes; for any given cell index of the K0 cell indexes, in a case that a value of a sub-field corresponding to the given cell index of the K0 sub-fields is equal to a first value, a cell identified by the given cell index is one of the K cells; and in a case that the value of the sub-field corresponding to the given cell index of the K0 sub-fields is not equal to the first value, a cell identified by the given cell index does not belong to the K cells.

As a sub-embodiment of the above embodiment, the K0 sub-fields are respectively K0 bits, and the first value is equal to 1.

As a sub-embodiment of the above embodiment, the K0 sub-fields are respectively K0 bits, and the first value is equal to 0.

As a sub-embodiment of the above embodiment, a corresponding relationship between the K0 sub-fields and the K0 cell indexes is configured by higher layer signaling.

As an embodiment, the K cell indexes are used for determining the first cell.

As an embodiment, the K cell indexes are used for determining that the first CSI set is transmitted on the PUSCHs of the first cell of the K cells.

As an embodiment, the meaning of the second field in the first DCI being used for determining the first cell includes that the second field includes at least one of the K sub-fields, the K sub-fields are respectively used for determining the K cell indexes, and the K cell indexes are used for determining the first cell.

As an embodiment, the meaning of the second field in the first DCI being used for determining the first cell includes that the second field includes at least one of the K sub-fields, the K sub-fields are respectively used for determining the K cell indexes, and the K cell indexes are used for determining that the first CSI set is transmitted on the PUSCHs of the first cell of the K cells.

As an embodiment, a cell of the K cells that is configured with PUCCHs is used for determining the first cell.

As an embodiment, a cell of the K cells that is configured with PUCCHs is used for determining that the first CSI set is transmitted on the PUSCHs of the first cell of the K cells.

As an embodiment, one cell of the K cells is configured with PUCCHs.

As an embodiment, only one cell of the K cells is configured with PUCCHs.

As an embodiment, the meaning of the second field in the first DCI being used for determining the first cell includes that the second field includes at least one of the K sub-fields, the K sub-fields are respectively used for determining the K cell indexes, and a cell of the K cells that is configured with PUCCHs is used for determining the first cell.

As an embodiment, the meaning of the second field in the first DCI being used for determining the first cell includes that the second field includes at least one of the K sub-fields, the K sub-fields are respectively used for determining the K cell indexes, and a cell of the K cells that is configured with PUCCHs is used for determining that the first CSI set is transmitted on the PUSCHs of the first cell of the K cells.

As an embodiment, the first cell is a cell of the K cells that is configured with PUCCHs.

As an embodiment, the first cell is the only cell of the K cells that is configured with PUCCHs.

As an embodiment, the meaning of the second field in the first DCI being used for determining the first cell includes that the second field includes at least one of the K sub-fields, the K sub-fields are respectively used for determining the K cell indexes, and the first cell is a cell indicated by a sub-field of the K sub-fields located at a target position.

As an embodiment, the meaning of the second field in the first DCI being used for determining the first cell includes that the second field includes at least one of the K sub-fields, the K sub-fields are respectively used for determining the K cell indexes, and the first CSI set is transmitted on the PUSCHs of the cell indicated by the sub-field located at the target position of the K sub-fields.

### Embodiment 9

Embodiment 9 exemplifies a schematic diagram of K cell indexes used for determining a first cell according to an embodiment of the present application, as shown in FIG. 9.

As an embodiment, the K cell indexes are used by the first node for determining the first cell.

As an embodiment, the first node determines the first cell according to the K cell indexes.

As an embodiment, a cell with a smaller cell index of the K cells is preferentially selected as the first cell.

As an embodiment, a cell with a greater cell index of the K cells is preferentially selected as the first cell.

As an embodiment, the first cell is a cell with the smallest cell index of the K cells.

As an embodiment, the first cell is a cell with the greatest cell index of the K cells.

As an embodiment, in a case that other parameters are the same, a cell with a smaller cell index of the K cells is preferentially selected as the first cell.

As an embodiment, in a case that other parameters are the same, a cell with a greater cell index of the K cells is preferentially selected as the first cell.

As an embodiment, the other parameters include parameters except the cell indexes that influence the determination of the first cell.

As an embodiment, the other parameters include priorities.

As an embodiment, the other parameters include MCSs.

As an embodiment, the other parameters include whether PUCCHs are configured.

As an embodiment, the K cells have the same other parameters.

As an embodiment, the first DCI is used for scheduling PUSCHs on K4 cells, K4 is a positive integer greater than K, and at least one cell of the K4 cells does not belong to the K cells; and the K cells are composed of all cells of the K4 cells that have the same other parameters.

### Embodiment 10

Embodiment 10 exemplifies a schematic diagram of a cell of K cells that is configured with PUCCHs used for determining a first cell according to an embodiment of the present application, as shown in FIG. 10.

As an embodiment, a cell of the K cells that is configured with PUCCHs is used by the first node for determining the first cell.

As an embodiment, only one cell of the K cells is configured with PUCCHs.

As an embodiment, there are multiple cells in the K cells that are configured with PUCCHs.

As an embodiment, the first node determines the first cell according to a cell of the K cells that is configured with PUCCHs.

As an embodiment, the first cell is a cell of the K cells that is configured with PUCCHs.

As an embodiment, the first cell is the only cell of the K cells that is configured with PUCCHs.

As an embodiment, the first node determines the first cell according to cells of the K cells that are configured with PUCCHs.

As an embodiment, a cell of the K cells that is configured with PUCCHs is preferentially selected as the first cell.

As an embodiment, in a case that other parameters are the same, a cell of the K cells that is configured with PUCCHs is preferentially selected as the first cell.

As a sub-embodiment of the above embodiment, the other parameters include parameters except whether PUCCHs are configured that influence the determination of the first cell.

As a sub-embodiment of the above embodiment, the other parameters include priorities.

As a sub-embodiment of the above embodiment, the other parameters include MCSs.

As a sub-embodiment of the above embodiment, the other parameters include cell indexes.

As a sub-embodiment of the above embodiment, the K cells have the same other parameters.

As an embodiment, in a case that there are K3 cells in the K cells that are configured with PUCCHs and K3 is a positive integer greater than 1, other parameters are used for determining the first cell.

As a sub-embodiment of the above embodiment, the other parameters are used for determining the first cell from the K3 cells.

As a sub-embodiment of the above embodiment, the other parameters include parameters except whether PUCCHs are configured that influence the determination of the first cell.

As a sub-embodiment of the above embodiment, the other parameters include priorities.

As a sub-embodiment of the above embodiment, the other parameters include MCSs.

As a sub-embodiment of the above embodiment, the other parameters include cell indexes.

As an embodiment, in a case that there are K3 cells in the K cells that are configured with PUCCHs and K3 is a positive integer greater than 1, MCSs of the K3 cells are used for determining the first cell.

As a sub-embodiment of the above embodiment, the first cell is a cell with the highest MCS of the K3 cells.

As an embodiment, in a case that there are K3 cells in the K cells that are configured with PUCCHs and K3 is a positive integer greater than 1, cell indexes of the K3 cells are used for determining the first cell.

As a sub-embodiment of the above embodiment, the first cell is a cell with the smallest cell index of the K3 cells.

As a sub-embodiment of the above embodiment, the first cell is a cell with the greatest cell index of the K3 cells.

As an embodiment, in a case that there are K3 cells in the K cells that are configured with PUCCHs and K3 is a positive integer greater than 1, the first cell is a cell with the highest priority of the K3 cells.

As an embodiment, in a case that there are K3 cells in the K cells that are configured with PUCCHs and K3 is a positive integer greater than 1, the first cell is a cell indicated by a sub-field of the K3 sub-fields that ranks first in the first DCI; and the K3 sub-fields are sub-fields of the K sub-fields that are respectively used for scheduling the K3 cells.

As an embodiment, in a case that there are K3 cells in the K cells that are configured with PUCCHs and K3 is a positive integer greater than 1, the first cell is a cell indicated by a sub-field of the K3 sub-fields that ranks the last in the first DCI; and the K3 sub-fields are sub-fields of the K sub-fields that are respectively used for scheduling the K3 cells.

### Embodiment 11

Embodiment 11 exemplifies a schematic diagram of a first cell that is a cell indicated by a sub-field of K sub-fields located at a target position according to an embodiment of the present application, as shown in FIG. 11. In embodiment 11, the target position is default. In FIG. 11, the K sub-fields are respectively represented as sub-field #0, ..., and sub-field #(K-1).

As an embodiment, the meaning of the phrase the target position being default includes that the target position does not need to be configured.

As an embodiment, the meaning of the phrase the target position being default includes that the target position is defaulted.

As an embodiment, the meaning of the phrase the target position being default includes that the target position is the position of the first sub-field of the K sub-fields.

As an embodiment, the meaning of the phrase the target position being default includes that the target position is the position of the last sub-field of the K sub-fields.

As an embodiment, the meaning of the phrase the target position being default includes that the K sub-fields are respectively K bits, and the target position is the position of the most significant bit (MSB) of the K bits.

As an embodiment, the meaning of the phrase the target position being default includes that the K sub-fields are respectively K bits, and the target position is the position of the least significant bit (LSB) of the K bits.

As an embodiment, the meaning of the phrase the target position being default includes that the target position is the position of a sub-field of the K sub-fields that includes the MSB of the K sub-fields.

As an embodiment, the meaning of the phrase the target position being default includes that the target position is the position of a sub-field of the K sub-fields that includes the LSB of the K sub-fields.

As an embodiment, the meaning of the phrase the target position being default includes that the target position is the position of a sub-field of the K sub-fields that ranks first in the first DCI.

As an embodiment, the meaning of the phrase the target position being default includes that the target position is the position of a sub-field of the K sub-fields that ranks second in the first DCI.

As an embodiment, the meaning of the phrase the target position being default includes that the target position is the position of a sub-field of the K sub-fields that ranks last in the first DCI.

As an embodiment, the meaning of the phrase the target position being default includes that the target position is the position of a sub-field of the K sub-fields that ranks second to last in the first DCI.

As an embodiment, the target position is the position of a sub-field of the K sub-fields that is the closest to the MSB of the first DCI.

As an embodiment, the target position is the position of a sub-field of the K sub-fields that is the closest to the LSB of the first DCI.

### Embodiment 12

Embodiment 12 exemplifies a schematic diagram of K sub-fields respectively used for determining priorities of K PUSCHs according to an embodiment of the present application, as shown in FIG. 12. In embodiment 12, the K sub-fields are respectively used by the first node for determining priorities of K PUSCHs; and the K PUSCHs are respectively located on the K cells. In FIG. 12, the K sub-fields are respectively represented as sub-field #0, ..., and sub-field #(K-1); and the priorities of the K PUSCHs are respectively represented as priority of PUSCH #0, ..., and priority of PUSCH #(K-1).

As an embodiment, any sub-field of the K sub-fields includes all or partial bits in a DCI field priority indicator.

As an embodiment, the K sub-fields respectively include different bits in a DCI field priority indicator.

As an embodiment, the K sub-fields respectively include all or partial bits in K DCI field priority indicators.

As an embodiment, the K sub-fields respectively include K DCI field priority indicators.

As an embodiment, the K sub-fields are respectively K DCI field priority indicators.

As an embodiment, frequency-domain resources occupied by the K PUSCHs respectively belong to the K cells.

As an embodiment, the K PUSCHs are respectively transmitted on the K cells.

As an embodiment, the K sub-fields respectively indicate the priorities of the K PUSCHs.

As an embodiment, the K sub-fields respectively indicate K priority indexes, and the K priority indexes respectively indicate the priorities of the K PUSCHs.

As an embodiment, any priority index of the K priority indexes is a non-negative integer.

As an embodiment, any priority index of the K priority indexes is equal to 0 or 1.

As an embodiment, there are two equal priority indexes in the K priority indexes.

As an embodiment, there are two non-equal priority indexes in the K priority indexes.

As an embodiment, there are two PUSCHs whose priorities are the same in the K PUSCHs.

As an embodiment, there are two PUSCHs whose priorities are different in the K PUSCHs.

As an embodiment, the priorities of the K PUSCHs are used by the first node for determining the first cell.

As an embodiment, the priorities of the K PUSCHs are used by the first node for determining that the first CSI set is transmitted on the PUSCHs of the first cell of the K cells.

As an embodiment, the meaning of the second field in the first DCI being used for determining the first cell includes that the second field includes at least one of the K sub-fields, the K sub-fields are respectively used for determining the priorities of the K PUSCHs, and the priorities of the K PUSCHs are used for determining the first cell.

As an embodiment, the meaning of the second field in the first DCI being used for determining the first cell includes that the second field includes at least one of the K sub-fields, the K sub-fields are respectively used for determining the priorities of the K PUSCHs, and the priorities of the K PUSCHs are used for determining that the first CSI set is transmitted on the PUSCHs of the first cell of the K cells.

As an embodiment, the first cell is a cell with the highest priority of the K cells.

As an embodiment, the first cell is a cell with the lowest priority of the K cells.

As an embodiment, a cell with a higher priority of the K cells is preferentially selected as the first cell.

As an embodiment, a cell with a lower priority of the K cells is preferentially selected as the first cell.

As an embodiment, in a case that other parameters are the same, a cell with a higher priority of the K cells is preferentially selected as the first cell.

As a sub-embodiment of the above embodiment, the other parameters include parameters except the priorities of the PUSCHs that influence the determination of the first cell.

As a sub-embodiment of the above embodiment, the other parameters include MCSs.

As a sub-embodiment of the above embodiment, the other parameters include cell indexes.

As a sub-embodiment of the above embodiment, the other parameters include whether PUCCHs are configured.

As a sub-embodiment of the above embodiment, the K cells have the same other parameters.

As a sub-embodiment of the above embodiment, the first cell is a cell with the highest priority of the K cells.

As a sub-embodiment of the above embodiment, the first DCI is used for scheduling PUSCHs on K4 cells, K4 is a positive integer greater than K, and at least one cell of the K4 cells does not belong to the K cells; and the K cells are composed of all cells of the K4 cells that have the same other parameters.

As an embodiment, the meaning of a priority being higher than another priority includes that a priority index of the priority is greater than a priority index of the other priority.

As an embodiment, the meaning of a priority being higher than another priority includes that a priority index of the priority is smaller than a priority index of the other priority.

As an embodiment, in a case that there are K2 cells in the K cells whose priorities are the same as the highest priority of the priorities of the K PUSCHs and K2 is a positive integer greater than 1, other parameters are used for determining the first cell.

As a sub-embodiment of the above embodiment, the other parameters include parameters except the priorities of the PUSCHs that influence the determination of the first cell.

As a sub-embodiment of the above embodiment, the other parameters include MCSs.

As a sub-embodiment of the above embodiment, the other parameters include cell indexes.

As a sub-embodiment of the above embodiment, the other parameters include whether PUCCHs are configured.

As an embodiment, the meaning of two priorities being the same includes that priority indexes of the two priorities are equal.

As an embodiment, the priorities of the K cells are respectively the priorities of the K PUSCHs.

As an embodiment, in a case that there are K2 cells in the K cells whose priorities are the same as the highest priority of the priorities of the K PUSCHs and K2 is a positive integer greater than 1, the MCSs of the K2 cells are used for determining the first cell from the K2 cells.

As a sub-embodiment of the above embodiment, the first cell is a cell with the highest MCS of the K2 cells.

As an embodiment, in a case that there are K2 cells in the K cells whose priorities are the same as the highest priority of the priorities of the K PUSCHs and K2 is a positive integer greater than 1, the cell indexes of the K2 cells are used for determining the first cell from the K2 cells.

As a sub-embodiment of the above embodiment, the first cell is a cell with the smallest cell index of the K2 cells.

As a sub-embodiment of the above embodiment, the first cell is a cell with the greatest cell index of the K2 cells.

As an embodiment, in a case that there are K2 cells in the K cells whose priorities are the same as the highest priority of the priorities of the K PUSCHs and K2 is a positive integer greater than 1, the first cell is a cell indicated by a sub-field of the K2 sub-fields that ranks first in the first DCI; and the K2 sub-fields are sub-fields of the K sub-fields that are respectively used for scheduling the K2 cells.

As an embodiment, the K sub-fields respectively indicate the K MCSs and are respectively used for determining the K cell indexes.

As an embodiment, the K sub-fields respectively indicate the K MCSs and are respectively used for determining the priorities of the K PUSCHs.

As an embodiment, the K sub-fields are respectively used for determining the K cell indexes and are respectively used for determining the priorities of the K PUSCHs.

As an embodiment, the K sub-fields respectively indicate the K MCSs, are respectively used for determining the K cell indexes, and are respectively used for determining the priorities of the K PUSCHs.

### Embodiment 13

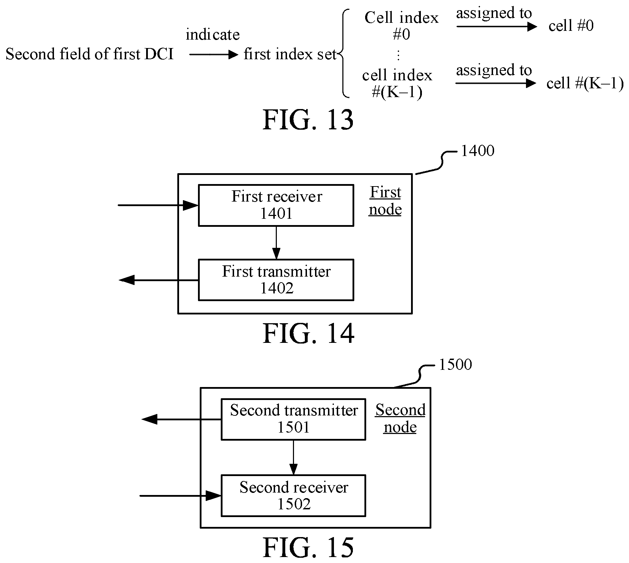

Embodiment 13 exemplifies a schematic diagram of a second field in a first DCI used to indicate a first index set according to an embodiment of the present application, as shown in FIG. 13. In embodiment 13, the first index set includes K cell indexes, and the K cell indexes are respectively assigned to the K cells. In FIG. 13, the K cell indexes are respectively represented as cell index #0, ..., and cell index #(K-1); and the K cells are respectively represented as cell #0, ..., and cell #(K-1).

As an embodiment, any cell index of the K cell indexes includes an ServCellIndex or an SCellIndex.

As an embodiment, the K cell indexes are respectively non-negative integers.

As an embodiment, the K cell indexes are respectively non-negative integers not greater than 32.

As an embodiment, every two of the K cell indexes are not equal.

As an embodiment, the first index set is composed of the K cell indexes.

As an embodiment, the first index set includes at least one cell index that does not belong to the K cell indexes.

As an embodiment, the first DCI schedules PUSCHs on at least one other cell in addition to the K cells, and the first index set includes the cell index of each cell of the at least one other cell.

As an embodiment, the K cell indexes are used for determining the first cell.

As an embodiment, the K cell indexes are used for determining the first cell from the K cells.

As an embodiment, the K cell indexes are used for determining that the first CSI set is transmitted on the PUSCHs of the first cell of the K cells.

As an embodiment, the meaning of the second field in the first DCI being used for determining the first cell includes that the second field in the first DCI indicates a first index set, the first index set includes K cell indexes, and the K cell indexes are respectively assigned to the K cells; and the K cell indexes are used for determining the first cell.

As an embodiment, a cell with a smaller cell index of the K cells is preferentially selected as the first cell.

As an embodiment, a cell with a greater cell index of the K cells is preferentially selected as the first cell.

As an embodiment, the first cell is a cell with the smallest cell index of the K cells.

As an embodiment, the first cell is a cell with the greatest cell index of the K cells.

As an embodiment, in a case that other parameters are the same, a cell with a smaller cell index of the K cells is preferentially selected as the first cell.

As an embodiment, in a case that other parameters are the same, a cell with a greater cell index of the K cells is preferentially selected as the first cell.

As an embodiment, the other parameters include parameters except the cell indexes that influence the determination of the first cell.

As an embodiment, the other parameters include priorities.

As an embodiment, the other parameters include MCSs.

As an embodiment, the other parameters include whether PUCCHs are configured.

As an embodiment, the K cells have the same other parameters.

As an embodiment, the first index set includes K4 cell indexes, the K4 cell indexes are respectively configured for the K4 cells, and K4 is a positive integer greater than K; at least one cell of the K4 cells does not belong to the K cells; and the K cells are composed of all cells of the K4 cells that have the same other parameters.

As an embodiment, the first DCI is used for scheduling PUSCHs on each cell of the K4 cells.

As an embodiment, a cell of the K cells that is configured with PUCCHs is used for determining the first cell.

As an embodiment, a cell of the K cells that is configured with PUCCHs is used for determining that the first CSI set is transmitted on the PUSCHs of the first cell of the K cells.

As an embodiment, the meaning of the second field in the first DCI being used for determining the first cell includes that the second field in the first DCI indicates a first index set, the first index set includes K cell indexes, and a cell of the K cells that is configured with PUCCHs is used for determining the first cell.

As an embodiment, a cell of the K cells that is configured with PUCCHs is preferentially selected as the first cell.

As an embodiment, the first cell is a cell of the K cells that is configured with PUCCHs.

As an embodiment, the first cell is the only cell of the K cells that is configured with PUCCHs.

As an embodiment, in a case that other parameters are the same, a cell of the K cells that is configured with PUCCHs is preferentially selected as the first cell.

As an embodiment, in a case that there are K3 cells in the K cells that are configured with PUCCHs and K3 is a positive integer greater than 1, other parameters are used for determining the first cell.

As an embodiment, the other parameters include parameters except whether PUCCHs are configured that influence the determination of the first cell.

As an embodiment, the other parameters include at least one of priorities, MCSs, or cell indexes.

As an embodiment, the K cell indexes are arranged sequentially in the first index set, and a cell index of the K cell indexes at a given position in the first index set is the cell index of the first cell.

As an embodiment, the meaning of the second field in the first DCI being used for determining the first cell includes that the second field in the first DCI indicates a first index set, and the first index set includes K cell indexes; and the K cell indexes are arranged sequentially in the first index set, and a cell index of the K cell indexes at a given position in the first index set is the cell index of the first cell.

As an embodiment, the given position is a position of a cell index of the K cell indexes that ranks first in the first index set.

As an embodiment, the given position is a position of a cell index of the K cell indexes that ranks second in the first index set.

As an embodiment, the given position is a position of a cell index of the K cell indexes that ranks last in the first index set.

As an embodiment, the given position is a position of a cell index of the K cell indexes that ranks second to last in the first index set.

As an embodiment, the given position is a position of a cell index of the K cell indexes that includes the MSB of the first index set.

As an embodiment, the given position is a position of a cell index of the K cell indexes that includes the LSB of the first index set.

As an embodiment, the given position is a position of a cell index of the K cell indexes that is the closest to the MSB of the first index set.

As an embodiment, the given position is a position of a cell index of the K cell indexes that is the closest to the LSB of the first index set.

As an embodiment, candidate values of the second field include Q candidate values, where Q is a positive integer greater than 1; the Q candidate values respectively indicate Q index sets; the first index set is an index set of the Q index sets indicated by a value of the second field in the first DCI; and the Q candidate values are Q non-negative integers, every two of which are not equal to each other.

As an embodiment, the number of all candidate values of the second field is equal to Q.

As an embodiment, all candidate values of the second field are the Q candidate values.

As an embodiment, the number of all candidate values of the second field is greater than Q.

As an embodiment, at least one candidate value of all candidate values of the second field does not belong to the Q candidate values.

As an embodiment, the number of all candidate values of the second field is equal to Q+1.

As an embodiment, a corresponding relationship between the Q candidate values and the Q index sets is configured by RRC signaling.

As an embodiment, the Q candidate values are respectively Q codepoints of the second field.

As an embodiment, any index set of the Q index sets includes at least one cell index.

As an embodiment, any index set of the Q index sets is composed of at least one cell index.

As an embodiment, the second field includes all or partial information in a DCI field carrier indicator.

As an embodiment, the second field includes a DCI field carrier indicator.

As an embodiment, the second field is a DCI field carrier indicator.

### Embodiment 14

Embodiment 14 exemplifies a structural block diagram of a processing device used in a first node according to an embodiment of the present application, as shown in FIG. 14. In FIG. 14, the processing device 1400 in the first node includes a first receiver 1401 and a first transmitter 1402.

In embodiment 14, the first receiver 1401 is configured to receive a first message set and first DCI, and execute measurement on a first RS resource group; and the first transmitter 1402 is configured to transmit a first CSI set on a PUSCH of a first cell.

In embodiment 14, the first message set includes a first message, and the first DCI includes a first field and a second field; the first CSI set includes a first CSI; the first DCI is used for scheduling PUSCHs on at least K cells, and K is a positive integer greater than 1; the first cell is one of the K cells; the first field in the first DCI is used for triggering the first CSI; the second field in the first DCI is used for determining the first cell; and the measurement executed on the first RS resource group is used for calculating the first CSI, and the first message is used to indicate the first RS resource group.

As an embodiment, the first DCI includes K sub-fields, and the K sub-fields are respectively used for scheduling the K cells; and the second field in the first DCI includes at least one of the K sub-fields.

As an embodiment, the K sub-fields respectively indicate K MCSs, the K MCSs are respectively used for K PUSCHs, and the K PUSCHs are respectively located on the K cells.

As an embodiment, the K sub-fields are respectively used for determining K cell indexes, and the K cell indexes are respectively assigned to the K cells.

As an embodiment, the first cell is a cell indicated by a sub-field of the K sub-fields located at a target position; and the target position is default.

As an embodiment, the K sub-fields are respectively used for determining priorities of K PUSCHs, and the K PUSCHs are respectively located on the K cells.

As an embodiment, the second field in the first DCI indicates a first index set, the first index set includes K cell indexes, and the K cell indexes are respectively assigned to the K cells.

As an embodiment, the first node is user equipment.

As an embodiment, the first node is a relay node apparatus.

As an embodiment, the first transmitter 1402 is configured to transmit other signals in addition to the first CSI set on the PUSCH of the first cell.

As an embodiment, the first transmitter 1402 is configured to respectively transmit PUSCHs on (K-1) cells; and the (K-1) cells are composed of all cells of the K cells except the first cell.

As an embodiment, the first message is carried by an RRC IE; the measurement executed on the first RS resource group includes channel measurement, and all RS resources in the first RS resource group are located on the same cell; the first DCI schedules K PUSCHs, and the K PUSCHs are respectively located on the K cells; the first CSI set is only transmitted on the PUSCHs on the first cell of the K PUSCHs; and the meaning of the second field in the first DCI being used for determining the first cell includes that the second field in the first DCI is used for determining that the first CSI set is transmitted on the PUSCH of the first cell of the K cells.

As an embodiment, the K cells belong to the same PUCCH group.

As an embodiment, K BWPs are respectively BWPs scheduled by the first DCI of the K cells, and the K cells have the same subcarrier spacing configuration.

As an embodiment, the first transmitter 1401 includes at least one of {the antennas 452, the receivers 454, the reception processor 456, the multi-antenna reception processor 458, the controller/processor 459, the memory 460, and the data source 467} in embodiment 4.

As an embodiment, the first transmitter 1402 includes at least one of {the antennas 452, the transmitters 454, the transmission processor 468, the multi-antenna transmission processor 457, the controller/processor 459, the memory 460, and the data source 467} in embodiment 4.

### Embodiment 15

Embodiment 15 exemplifies a structural block diagram of a processing device used in a second node according to an embodiment of the present application, as shown in FIG. 13. In FIG. 15, the processing device 1500 in the second node includes a second transmitter 1501 and a first receiver 1502.

In embodiment 15, the second transmitter 1501 is configured to transmit a first message set and first DCI; and the second receiver 1502 is configured to receive a first CSI set on a PUSCH of a first cell.

In embodiment 15, the first message set includes a first message, and the first DCI includes a first field and a second field; the first CSI set includes a first CSI; the first DCI is used for scheduling PUSCHs on at least K cells, and K is a positive integer greater than 1; the first cell is one of the K cells; the first field in the first DCI is used for triggering the first CSI; the second field in the first DCI is used for determining the first cell; and measurement executed on a first RS resource group is used for calculating the first CSI, and the first message is used to indicate the first RS resource group.

As an embodiment, the first DCI includes K sub-fields, and the K sub-fields are respectively used for scheduling the K cells; and the second field in the first DCI includes at least one of the K sub-fields.

As an embodiment, the K sub-fields respectively indicate K MCSs, the K MCSs are respectively used for K PUSCHs, and the K PUSCHs are respectively located on the K cells.

As an embodiment, the K sub-fields are respectively used for determining K cell indexes, and the K cell indexes are respectively assigned to the K cells.

As an embodiment, the first cell is a cell indicated by a sub-field of the K sub-fields located at a target position; and the target position is default.

As an embodiment, the K sub-fields are respectively used for determining priorities of K PUSCHs, and the K PUSCHs are respectively located on the K cells.

As an embodiment, the second field in the first DCI indicates a first index set, the first index set includes K cell indexes, and the K cell indexes are respectively assigned to the K cells.

As an embodiment, the second node is a base station apparatus.

As an embodiment, the second node is user equipment.

As an embodiment, the second node is a relay node apparatus.

As an embodiment, the second transmitter 1501 transmits an RS on the first RS resource group.

As an embodiment, the second receiver 1502 is configured to receive other signals in addition to the first CSI set on the PUSCH of the first cell.

As an embodiment, the second receiver 1502 is configured to respectively receive PUSCHs on (K-1) cells; and the (K-1) cells are composed of all cells of the K cells except the first cell.

As an embodiment, the first message is carried by an RRC IE; the measurement executed on the first RS resource group includes channel measurement, and all RS resources in the first RS resource group are located on the same cell; the first DCI schedules K PUSCHs, and the K PUSCHs are respectively located on the K cells; the first CSI set is only transmitted on the PUSCHs on the first cell of the K PUSCHs; and the meaning of the second field in the first DCI being used for determining the first cell includes that the second field in the first DCI is used for determining that the first CSI set is transmitted on the PUSCH of the first cell of the K cells.

As an embodiment, the K cells belong to the same PUCCH group.

As an embodiment, K BWPs are respectively BWPs scheduled by the first DCI of the K cells, and the K cells have the same subcarrier spacing configuration.

As an embodiment, the second transmitter 1501 includes at least one of {the antennas 420, the transmitters 418, the transmission processor 416, the multi-antenna transmission processor 471, the controller/processor 475, and the memory 476} in embodiment 4.

As an embodiment, the second receiver 1502 includes at least one of {the antennas 420, the receivers 418, the reception processor 470, the multi-antenna reception processor 472, the controller/processor 475, and the memory 476} in embodiment 4.

Those of ordinary skills in the art may understand that, all or some steps in the methods above may be executed through a program instructing related hardware, and the program may be stored in a computer-readable storage medium, such as a read only memory, a hard disc, or a compact disc. Optionally, all or some steps in the embodiments above may also be implemented by using one or more integrated circuits. Correspondingly, each module unit in the embodiments above may be implemented in the form of hardware or in the form of software functional modules. The present application is not limited to any specific combination of software and hardware. The user equipment, terminals, and UE in the present application include, but not limited to, drones, communication modules on drones, remote-controlled aircrafts, flying machines, small aircrafts, mobile phones, tablets, laptops, vehicle-mounted communication apparatuses, transportation vehicles, and vehicles, RSUs, wireless sensors, network cards, Internet of Things terminals, RFID terminals, NB-IOT terminals, MTC (Machine Type Communication) terminals, eMTC (enhanced MTC) terminals, data cards, network cards, vehicle-mounted communication apparatuses, low-cost mobile phones, low-cost tablets, and other wireless communication apparatuses. The base station or system apparatuses in the present application include, but not limited to, macro cellular base stations, micro cellular base stations, small cellular base stations, home base stations, relay base stations, eNBs, gNBs, TRPs (Transmitter Receiver Points), GNSSs, relay satellites, satellite base stations, airborne base stations, RSUs (Road Side Units), drones, testing apparatuses, and wireless communication apparatuses such as transmitting and receiving devices or signaling testers that simulate partial functions of base stations.

Those skilled in the art should understand that the present disclosure may be implemented in other specified forms without departing from its core or essential features. Therefore, the currently disclosed embodiments should be considered descriptive rather than restrictive in any way. The scope of the present disclosure is determined by the attached claims rather than the preceding description, and all modifications within its equivalent meaning and scope are considered to be included therein.

## Claims

1. A first node for wireless communication, comprising:
a first receiver configured to receive a first message set and first DCI, wherein the first message set comprises a first message, and the first DCI comprises a first field and a second field; and execute measurement on a first RS resource group; and
a first transmitter configured to transmit a first CSI set on a PUSCH of a first cell, wherein the first CSI set comprises a first CSI;
wherein the first DCI is used for scheduling PUSCHs on at least K cells, and K is a positive integer greater than 1; the first cell is one of the K cells; the first field in the first DCI is used for triggering the first CSI; the second field in the first DCI is used for determining the first cell; and the measurement executed on the first RS resource group is used for calculating the first CSI, and the first message is used to indicate the first RS resource group.

2. The first node according to claim 1, wherein the first DCI comprises K sub-fields, and the K sub-fields are respectively used for scheduling the K cells; and the second field in the first DCI comprises at least one of the K sub-fields.

3. The first node according to claim 2, wherein the K sub-fields respectively indicate K MCSs, the K MCSs are respectively used for K PUSCHs, and the K PUSCHs are respectively located on the K cells.

4. The first node according to claim 2 or 3, wherein the K sub-fields are respectively used for determining K cell indexes, and the K cell indexes are respectively assigned to the K cells.

5. The first node according to claim 4, wherein the first cell is a cell indicated by a sub-field of the K sub-fields located at a target position; and the target position is default.

6. The first node according to any one of claims 2 to 5, wherein the K sub-fields are respectively used for determining priorities of K PUSCHs, and the K PUSCHs are respectively located on the K cells.

7. The first node according to claim 1, wherein the second field in the first DCI indicates a first index set, the first index set comprises K cell indexes, and the K cell indexes are respectively assigned to the K cells.

8. A second node for wireless communication, comprising:
a second transmitter configured to transmit a first message set and first DCI, wherein the first message set comprises a first message, and the first DCI comprises a first field and a second field; and
a second receiver configured to receive a first CSI set on a PUSCH of a first cell, wherein the first CSI set comprises a first CSI;
wherein the first DCI is used for scheduling PUSCHs on at least K cells, and K is a positive integer greater than 1; the first cell is one of the K cells; the first field in the first DCI is used for triggering the first CSI; the second field in the first DCI is used for determining the first cell; and measurement executed on a first RS resource group is used for calculating the first CSI, and the first message is used to indicate the first RS resource group.

9. The second node according to claim 8, wherein the first DCI comprises K sub-fields, and the K sub-fields are respectively used for scheduling the K cells; and the second field in the first DCI comprises at least one of the K sub-fields.

10. The second node according to claim 9, wherein the K sub-fields respectively indicate K MCSs, the K MCSs are respectively used for K PUSCHs, and the K PUSCHs are respectively located on the K cells.

11. The second node according to claim 9 or 10, wherein the K sub-fields are respectively used for determining K cell indexes, and the K cell indexes are respectively assigned to the K cells.

12. The second node according to claim 11, wherein the first cell is a cell indicated by a sub-field of the K sub-fields located at a target position; and the target position is default.

13. The second node according to any one of claims 9 to 12, wherein the K sub-fields are respectively used for determining priorities of K PUSCHs, and the K PUSCHs are respectively located on the K cells.

14. The second node according to claim 8, wherein the second field in the first DCI indicates a first index set, the first index set comprises K cell indexes, and the K cell indexes are respectively assigned to the K cells.

15. A method used in a first node for wireless communication, comprising:
receiving a first message set and first DCI, wherein the first message set comprises a first message, and the first DCI comprises a first field and a second field;
executing measurement on a first RS resource group; and
transmitting a first CSI set on a PUSCH of a first cell, wherein the first CSI set comprises a first CSI;
wherein the first DCI is used for scheduling PUSCHs on at least K cells, and K is a positive integer greater than 1; the first cell is one of the K cells; the first field in the first DCI is used for triggering the first CSI; the second field in the first DCI is used for determining the first cell; and the measurement executed on the first RS resource group is used for calculating the first CSI, and the first message is used to indicate the first RS resource group.

16. The method according to claim 15, wherein the first DCI comprises K sub-fields, and the K sub-fields are respectively used for scheduling the K cells; and the second field in the first DCI comprises at least one of the K sub-fields.

17. The method according to claim 16, wherein the K sub-fields respectively indicate K MCSs, the K MCSs are respectively used for K PUSCHs, and the K PUSCHs are respectively located on the K cells.

18. The method according to claim 16 or 17, wherein the K sub-fields are respectively used for determining K cell indexes, and the K cell indexes are respectively assigned to the K cells.

19. The method according to claim 18, wherein the first cell is a cell indicated by a sub-field of the K sub-fields located at a target position; and the target position is default.

20. The method according to any one of claims 16 to 19, wherein the K sub-fields are respectively used for determining priorities of K PUSCHs, and the K PUSCHs are respectively located on the K cells.

21. The method according to claim 15, wherein the second field in the first DCI indicates a first index set, the first index set comprises K cell indexes, and the K cell indexes are respectively assigned to the K cells.

22. A method used in a second node for wireless communication, comprising:
transmitting a first message set and first DCI, wherein the first message set comprises a first message, and the first DCI comprises a first field and a second field; and
receiving a first CSI set on a PUSCH of a first cell, wherein the first CSI set comprises a first CSI;
wherein the first DCI is used for scheduling PUSCHs on at least K cells, and K is a positive integer greater than 1; the first cell is one of the K cells; the first field in the first DCI is used for triggering the first CSI; the second field in the first DCI is used for determining the first cell; and measurement executed on a first RS resource group is used for calculating the first CSI, and the first message is used to indicate the first RS resource group.

23. The method according to claim 22, wherein the first DCI comprises K sub-fields, and the K sub-fields are respectively used for scheduling the K cells; and the second field in the first DCI comprises at least one of the K sub-fields.

24. The method according to claim 23, wherein the K sub-fields respectively indicate K MCSs, the K MCSs are respectively used for K PUSCHs, and the K PUSCHs are respectively located on the K cells.

25. The method according to claim 23 or 24, wherein the K sub-fields are respectively used for determining K cell indexes, and the K cell indexes are respectively assigned to the K cells.

26. The method according to claim 25, wherein the first cell is a cell indicated by a sub-field of the K sub-fields located at a target position; and the target position is default.

27. The method according to any one of claims 23 to 26, wherein the K sub-fields are respectively used for determining priorities of K PUSCHs, and the K PUSCHs are respectively located on the K cells.

28. The method according to claim 22, wherein the second field in the first DCI indicates a first index set, the first index set comprises K cell indexes, and the K cell indexes are respectively assigned to the K cells.
